# EUROPEAN PATENT APPLICATION

(11) **EP 1 429 177 A1**
(43) Date of publication of application: **16.06.2004**
(21) Application number: 02755680.2
(22) Date of filing: 29.07.2002
(51) Int. Cl.: G02F 1/1343, G02F 1/1337

(54) **LIQUID CRYSTAL DISPLAY DEVICE**

(30) Priority: 02.08.2001 JP 2001235104; 24.08.2001 JP 2001255098; 31.08.2001 JP 2001264019
(71) Applicant: SANYO ELECTRIC CO., LTD., Moriguchi-shi, Osaka 570-0083 (JP); Tottori Sanyo Electric Co., Ltd., Tottori-shi, Tottori-ken 680-8634 (JP)
(72) Inventor: TANAKA, Shinichiro, Tottori-shi, Tottori 680-8634 (JP); IKEMOTO, Takashi, Tottori-shi, Tottori 680-8634 (JP); MORI, Yoshitaka, Tottori-shi, Tottori 680-8634 (JP); MORITA, Satoshi, Tottori-shi, Tottori 680-8634 (JP); KOBAYASHI, Osamu, Tottori-shi, Tottori 680-8634 (JP)
(74) Representative: Glawe. Delfs. Moll
(86) International application number: PCT/JP2002/007691
(87) International publication number: WO 2003/023508

(57) **Abstract**

An MVA liquid crystal display device capable of obtaining optimal display state by eliminating display irregularities so that liquid crystal molecules maintain an ideal inclination direction. Transmission light passing through a liquid crystal layer is efficiently utilized by defining an angle of correction on a strip-like projection (12) and a corresponding slit (6) formed on a first or second substrate, changing the outline of signal line (3) and the shape of an edge part of a pixel electrode (4), and optimizing the direction of extension of the transmission axis of a polarizer and the slit.

## Description

### Technical field

The present invention relates to a wide view angle liquid crystal display device having a plurality of domains provided within each single pixel.

### Background art

In general, liquid crystal display devices have the advantages of being slim and lightweight and consuming low electric power, and are widely used in appliances ranging from portable terminals to large-screen television monitors. Popular as such liquid crystal display devices are TN-type liquid crystal display devices, which, as display devices, offer high performance and quality.

However, TN-type and other liquid crystal display devices suffer from marked dependence on viewing angle and other disadvantages. For this reason, there have been proposed VA (vertically aligned)-type liquid crystal display devices, which have wider view angles than TN-type liquid crystal display devices. In a VA-type liquid crystal display device, liquid crystal having negative dielectric constant anisotropy is sandwiched between a pair of glass substrates, with a pixel electrode arranged on one glass substrate and a common electrode on the other. Vertical alignment films are laid on the two glass substrates, and a pair of polarizers is arranged on the outsides of the two glass substrates in such a way that the transmission axes of the two polarizers are perpendicular to each other. When there is no electric field between the two electrodes, liquid crystal molecules are aligned vertically by being restricted by the vertical alignment films. Thus, linearly polarized transmission light that has been transmitted through one polarizer is transmitted through the liquid crystal intact, and is then shielded by the other polarizer. On the other hand, when there is an electric field between the two electrodes, the liquid crystal molecules between the glass substrates are aligned horizontally by being inclined perpendicularly to the electric field. Thus, linearly polarized transmission light that has been transmitted through one polarizer is subjected to birefringence as it is transmitted through the liquid crystal, and is thereby formed into elliptically polarized light, which is then transmitted through the other polarizer.

To further improve the view angle of such a VA-type liquid crystal display device, there has been proposed an MVA (multi-domain vertically aligned) structure, in which a plurality of domains are formed within each single pixel by forming projections and grooves in it. An example of this structure is disclosed in Japanese Patent No. 2947350.

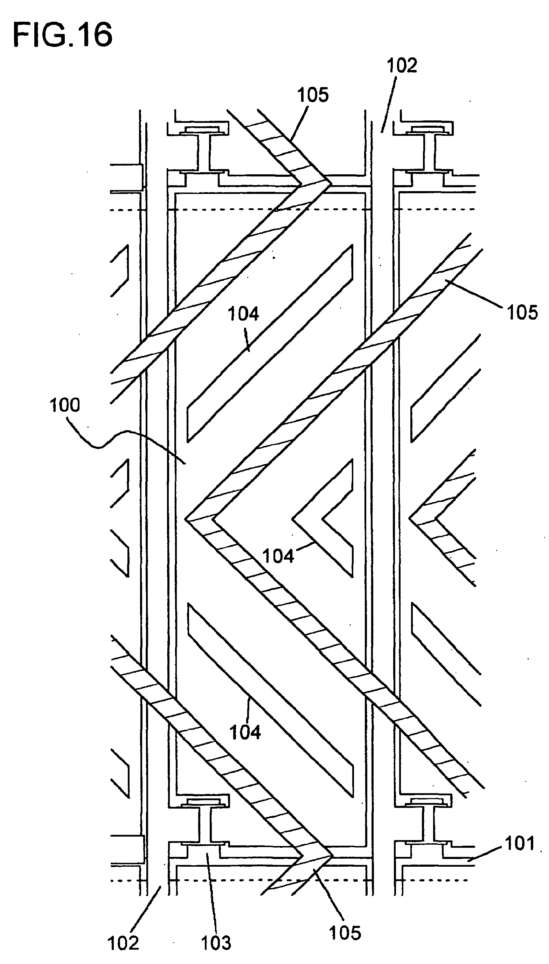

Fig. 16 shows the pixel structure of a conventional MVA-type liquid crystal display device. A pair of glass substrates is arranged parallel and face-to-face, with pixel electrodes 100, scanning lines 101, signal lines 102, and TFTs 103 formed on one glass substrate and color filters, common electrodes, and projections 105 formed on the other. Here, the color filters and the common electrodes are not illustrated. A plurality of scanning lines 101 and a plurality of signal lines 102 are laid in a matrix-like configuration on the glass substrate, with the TFTs 103 arranged at their intersections and the pixel electrodes 100 arranged in the areas they surround. The TFTs 103 have their gate electrodes connected to the scanning lines 101, have their source electrodes connected to the signal lines 102, and have their drain electrodes connected to the pixel electrodes 100. Slits 104 are formed in the pixel electrodes 100, and a plurality of projections 105 are formed in zigzags as seen from the direction normal to the glass substrate. The slits 104 are located between the projections 105, and are formed substantially parallel to the projections 105 adjacent to them. Liquid crystal molecules are inclined at 90° to the projections 105 and the slits 104, and are thus inclined in opposite directions with the projections 105 and the slits 104 serving as boundaries. On the outsides of the two glass substrates, there is arranged a pair of polarizers for cross polarization in such a way that the transmission axes of the polarizers are at 45° to the projections 105 so that, as seen from the direction perpendicular to the polarizers, the inclined liquid crystal molecules are at 45° to the transmission axes of the polarizers. When the inclined liquid crystal molecules are at 45° to the transmission axes of the polarizers, transmission light is transmitted through the polarizers most efficiently.

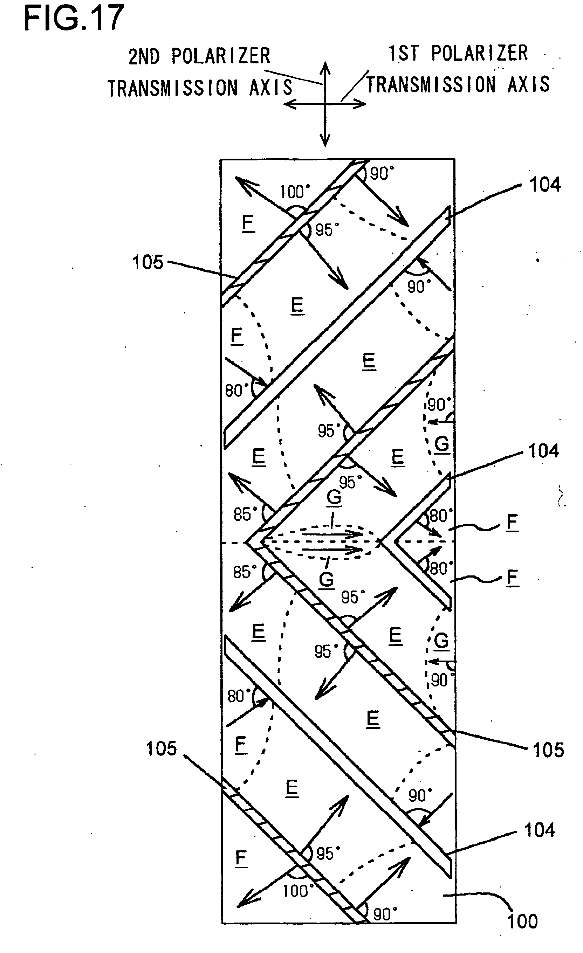

However, in a conventional MVA-type liquid crystal display device, the actual inclinations of liquid crystal molecules are not ideal, and this makes it impossible to achieve optimum display result. Fig. 17 schematically shows how liquid crystal molecules are inclined in the conventional pixel structure. Broken lines drawn in the pixel electrodes 100 indicate the boundaries between different inclination states of liquid crystal molecules;,that is, within each area surrounded by broken lines and a projection 105 or a slit 104, liquid crystal molecules are inclined substantially in the same direction. In each of those areas, an arrow indicates the direction in which liquid crystal molecules are inclined, and the angle noted near the arrow is the angle, as seen from the direction normal to the glass substrate, between the inclined liquid crystal molecules and the projection 105, the slit 104, or an edge of the pixel electrode 100. Here, the arrow points in the direction in which, when liquid crystal molecules located near the glass substrate having the projections 105 are inclined, those ends of the liquid crystal molecules which point away from the glass substrate point.

Liquid crystal molecules that are restricted by the slits 104 or the projections 105 are inclined not at 90° but at about 95° to the slits 104 or the projections 105 in a central portion of the pixel electrode 100, and they are inclined in directions further deviated from 90°, for example 80° or 100°, to the slits 104 or the projections 105 in a peripheral portion of the pixel electrode 100, where the inclination state of liquid crystal molecules varies from place to place. To use transmission light with maximum efficiency, liquid crystal molecules should ideally be inclined at 45° to the transmission axes of the polarizers. This corresponds to the state in which liquid crystal molecules are inclined at 90° to the projections 105 or the slits 104. In Fig. 17, the areas marked "E" are areas in which liquid crystal molecules are inclined in directions about 5° deviated from the ideal inclination directions, the areas marked "F' are areas in which liquid crystal molecules are inclined in direction about 10° deviated from the ideal inclination directions, and the areas marked "G" are areas in which liquid crystal molecules are inclined in directions about 45° deviated from the ideal inclination directions. While the central portion of the pixel electrode 100 is mostly occupied by the areas A, the peripheral portion is occupied more by the areas B and C.

As described above, with the conventional shapes of the slits 104 and the projections 105, most of the liquid crystal molecules of the pixel electrode 100 are inclined in directions deviated from the ideal inclination directions, and this makes it impossible to efficiently use transmission light. Moreover, the presence of a plurality of areas, like the areas E, F, and G, with different degrees of deviation from the ideal inclination directions within the pixel electrode 100 causes transmissivity to vary from one area to another, resulting in uneven display result.

A study conducted in search of the cause for such deviations in the inclination direction of liquid crystal molecules has revealed the following facts. In the central portion of the pixel electrode 100 (the areas in which the inclination is about 95° to the projections 105 or the slits 104), the cause of the about 5° deviation from the ideal inclinations is considered to be the slight influence of the electric fields produced at the adjacent pixel electrodes 100. On the other hand, in the peripheral portion of the pixel electrode 100, the same influence acts more markedly, tending to make liquid crystal molecules inclined at 90° to the edges of the pixel electrode 100. This causes the inclination state of liquid crystal molecules to vary from place to place depending on their location relative to whichever of the edges of the pixel electro 100, of the slits, and of the projections 105 are located nearby, and in addition causes great deviations from the ideal inclination directions.

Moreover, nowadays, to maximize the aperture ratio of pixels, pixel electrodes are often formed to be so large as to overlap signal lines. In such cases, the edges of the pixel electrode have a more serious influence on display result.

### Disclosure of the invention

An object of the present invention is to provide a liquid crystal display device that offers optimum display result.

To achieve the above object, according to the present invention, in a liquid crystal display device that is provided with a first substrate having pixel electrodes formed thereon in a matrix-like formation, slits formed in the pixel electrodes, a second substrate having a transparent electrode formed thereon, strip-like projections formed on the second substrate, alignment films laid on the first and second substrates individually and subjected to vertical alignment treatment, and a liquid crystal layer sandwiched between the first and second substrates and having negative dielectric constant anisotropy, and in which the liquid crystal molecules are aligned, when no electric field is applied to the liquid crystal layer, vertically and, when an electric field is applied to the liquid crystal layer, in the direction to which the liquid crystal molecules are restricted by the slits and the projections, the slits are formed substantially parallel to the directions in which the projections extend, and the parts of the contours of the slits facing the projections are formed in directions deviated by a correction angle from the directions in which the slits themselves extend.

According to the present invention, the slits are formed substantially parallel to the directions in which the projections extend, and the parts of the contours of the projections facing the slits are formed in directions deviated by a correction angle from the directions in which the slits themselves extend. Advisably, the correction angle for the slits or projections is set at about 3° to about 15°.

According to the present invention, a pair of polarizers is laid on the outsides of the two substrates, and the polarizers are so arranged that their transmission axes are perpendicular to each other and that the transmission axis of one of them is at about 45° to the directions in which the slits extend. Moreover, the directions in which the projections extend are at about 45° to the transmission axis of one of the polarizers.

With these structures, even when the liquid crystal molecules are influenced by the electric fields from the adjacent pixels, they are eventually inclined at about 45° to the transmission axes. This makes it possible to efficiently use the transmission light that is transmitted through the liquid crystal layer.

According to the present invention, in edge portions of the pixel electrodes, there is provided alleviating means for alleviating the influence of the electric field that acts on the liquid crystal molecules from the edge portions. As the alleviating means, sawtooth-shaped portions are formed in the edge portions of the pixel electrodes, or a plurality of pin holes are formed in the edge portions of the pixel electrodes, or second slits are formed in the edge portions of the pixel electrodes. Moreover, auxiliary projections are formed on the second substrate so as to lie along the edge portions of the pixel electrodes.

With these structures, it is possible to alleviate the influence of the electric fields from the adjacent pixels and the influence on the liquid crystal molecules from the edge portions of the pixel electrodes. This helps make uniform the difference between the actual and ideal (45° to the transmission axis) inclination directions of the liquid crystal molecules within a pixel, and thus helps alleviate uneven display.

According to the present invention, in a liquid crystal display device that is provided with a first substrate having a plurality of scanning lines and a plurality of signal lines formed thereon in a matrix-like formation, switching devices formed at the intersections between the scanning lines and the signal lines, pixel electrodes formed in the areas surrounded by the scanning lines and the signal lines and connected to the switching devices, a second substrate arranged face-to-face to the first substrate and having color filters formed thereon so as to correspond to the pixel electrodes, and liquid crystal sealed between the first and second substrates, at least the parts of edge portions of the pixel electrodes facing the signal lines are formed in zigzags, and the parts of the contours of the signal lines facing the pixel electrodes are so formed as to run along the edge portions of the pixel electrodes.

By forming at least parts of edge portions of the pixel electrodes in zigzags in this way, it is possible to alleviate the influence of the electric field that acts on the liquid crystal molecules from the edge portions. Moreover, by forming the contours of the signal lines adjacent to the pixel electrodes so as to run along the edge portions of the pixel electrodes, it is possible to alleviate uneven display in the edge portions of the pixel electrodes under the influence from the signal lines.

According to the present invention, a substantially constant interval is kept between the edge portions of the pixel electrodes and the contours of the signal lines all along the longer sides of the pixel electrodes. Moreover, as seen from the direction normal to the first substrate, the edge portions of the pixel electrodes overlap the signal lines. Moreover, the parts of the pixel electrodes formed in zigzags are sawtooth-shaped.

Furthermore, in a liquid crystal display device in which a plurality of strip-shaped projections are formed on the second substrate and slits are formed in the pixel electrode so as to be located substantially parallel to the projections, and in which a liquid crystal layer having negative dielectric constant anisotropy is sandwiched between the first and second substrates, as seen from the direction normal to the first substrate, the parts of the pixel electrodes formed in zigzags are located between the projections and the slits.

With these structures, even when the signal lines overlap the pixel electrodes, it is possible to minimize the overlaps. This helps reduce variation in the voltage on the pixel electrodes and thereby obtain satisfactory display result with high brightness.

In a liquid crystal display device that is provided with a first substrate having pixel electrodes formed thereon in a matrix-like formation, a second substrate having a transparent electrode formed thereon, strip-like projections formed on the second substrate so as to obliquely cross, as observed from the direction normal to the second substrate, edge portions. of the pixel electrodes, slits formed in the pixel electrodes so as to be parallel to the projections adjacent thereto, alignment films laid on the first and second substrates individually and subjected to vertical alignment treatment, and a liquid crystal layer sandwiched between the first and second substrates and having negative dielectric constant anisotropy, and in which the liquid crystal molecules are aligned, when no electric field is applied to the liquid crystal layer, vertically and, when an electric field is applied to the liquid crystal layer, in the direction to which the liquid crystal molecules are restricted by the slits and the projections, parts of edge portions of the pixel electrodes are formed in a sawtooth shape. This helps alleviate the influence of the electric field that acts on the liquid crystal molecules from the edge portions. The sawtooth-shaped portions are located, among other places, between the projections and the slits, at places where the slits approach the edge portions at an angle of 90° or less. This permits the sawtooth-shaped portions to be located at the places where the liquid crystal molecules are greatly influenced from the edge portion. This helps effectively alleviate the influence of the edge portions and thereby obtain satisfactory display result.

Moreover, auxiliary projections are formed on the second substrate in positions facing the sawtooth-shaped portions of the pixel electrodes. This helps further alleviate the influence of the edge portions on the liquid crystal molecules. Moreover, this helps make uniform the difference between the actual and ideal (45° to the transmission axis) inclination directions of the liquid crystal molecules within a pixel as observed from the direction normal to the substrate. Thus, it is possible to efficiently use transmission light and alleviate uneven display.

### Brief description of drawings

Fig. 1 is a plan view of a pixel portion of a first embodiment of the invention.
Fig. 2 is a sectional view taken along line A-A' shown in Fig. 1.
Fig. 3 is a plan view schematically showing the positional relationship between the pixel electrode and the projections in a second embodiment of the invention.
Fig. 4 is a plan view schematically showing the positional relationship between the pixel electrode and the projections in a third embodiment of the invention.
Fig. 5 is a plan view schematically showing the positional relationship between the pixel electrode and the projections in a fourth embodiment of the invention.
Fig. 6 is a plan view schematically showing the positional relationship between the pixel electrode and the projections in a fifth embodiment of the invention.
Fig. 7 is a plan view schematically showing the positional relationship between the pixel electrode and the projections in a sixth embodiment of the invention.
Fig. 8 is a plan view schematically showing the positional relationship between the pixel electrode and the projections in a seventh embodiment of the invention.
Fig. 9 is a plan view schematically showing the positional relationship between the pixel electrode and the projections in an eighth embodiment of the invention.
Fig. 10 is a plan view schematically showing the positional relationship between the pixel electrode and the projections in a ninth embodiment of the invention.
Fig. 11 is a plan view of the first substrate with the pixel electrode of a tenth embodiment of the invention.
Fig. 12 is a sectional view taken along line B-B' shown in Fig. 11.
Fig. 13 is a diagram schematically showing the relationship between the projections and the slits formed in the pixel electrodes in the tenth embodiment.
Fig. 14 is an enlarged view of a principal portion of an edge portion, where sawtooth-shaped portions are formed in the tenth embodiment.
Fig. 15 is an enlarged view of a principal portion showing the positional relationship between an edge portion, where sawtooth-shaped portions are formed, and projections in the tenth embodiment.
Fig. 16 is a diagram showing the pixel structure of a conventional MVA-type liquid crystal display device.
Fig. 17 is a diagram schematically showing how liquid crystal molecules are inclined in a conventional pixel structure.

### Best mode for carrying out the invention

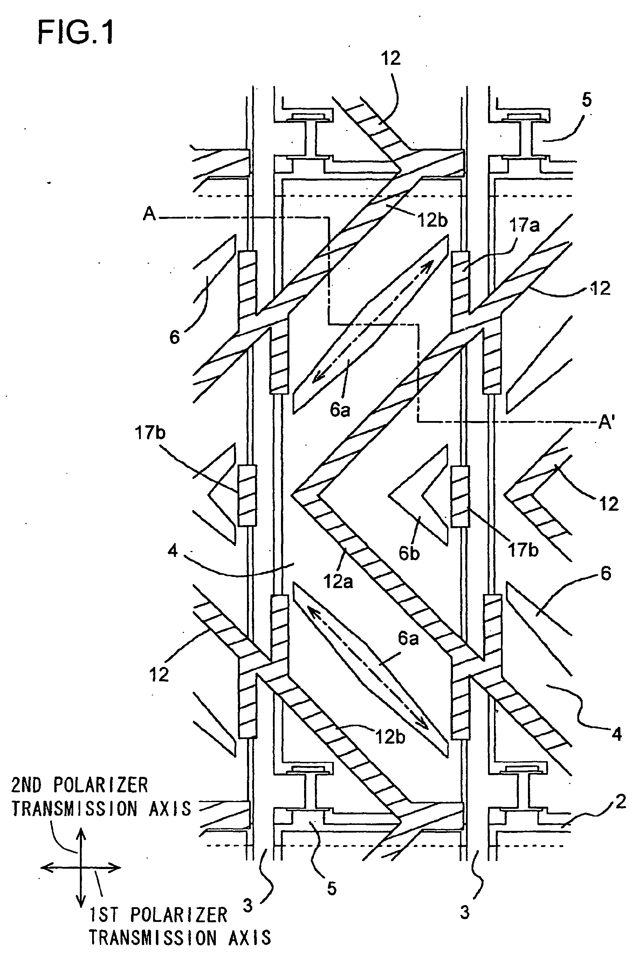

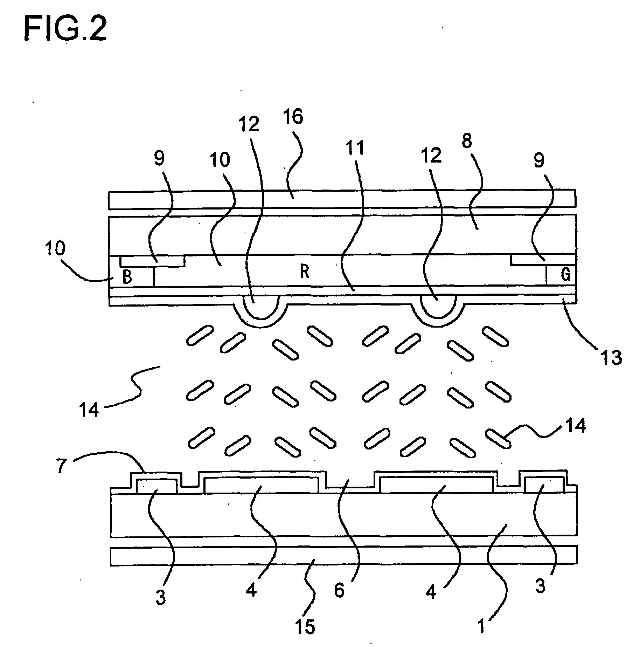

Hereinafter, a first embodiment of the present invention will be described with reference to the drawings. Fig. 1 is a plan view of the pixel portion of a first embodiment of the invention, and Fig. 2 is a sectional view taken along line A-A' shown in Fig. 1.

Reference numeral 1 represents a first substrate, which is a transparent substrate of, for example, glass. On this first substrate 1, there are laid scanning lines 2 and signal lines 3 in a matrix-like formation. The areas surrounded by the scanning lines 2 and the signal lines 3 each correspond to one pixel, and within these areas are laid pixel electrodes 4. At the intersections between the scanning lines 2 and the signal lines 3, there are formed TFTs 5, which are switching devices that connect to the pixel electrodes 4. Parts of the pixel electrodes 4 overlap the scanning lines 2 adjacent thereto, with an insulating film interposed therebetween, and these overlaps act as storage capacitors. In each pixel electrode 4, there are formed a plurality of slits 6, which will be described later. Reference numeral 7 represents an alignment film that covers the pixel electrodes 4 and that is subjected to vertical alignment treatment. In Fig. 2, the insulating film laid below the pixel electrodes 4 is omitted.

Reference numeral 8 represents a second substrate, which is a transparent substrate of, for example, glass. On the second substrate 8, there is formed a black matrix 9 so as to separate the individual pixels, and there are laid color filters 10 so as to correspond one-to-one to the pixels. The color filters 10 are of one of red (R), green (G), and blue (B) colors depending on the location of the corresponding pixels. On the color filters 10, there is laid a transparent electrode 11 of, for example, ITO (indium tin oxide), and, on the transparent electrode 11, there are formed projections 12 in a predetermined pattern. The transparent electrode 11 and the projections 12 are covered with an alignment film 13 that is subjected to vertical alignment treatment.

Between the two substrates 1 and 8, there is interposed a liquid crystal layer 14 having negative dielectric constant anisotropy. In each pixel, when no electric field is present between the pixel electrode 4 and the transparent electrode 11, liquid crystal molecules 14 are aligned vertically by being restricted by the alignment films 7 and 13. When an electric field is present between the pixel electrode 4 and the transparent electrode 11, liquid crystal molecules 14 are inclined in the horizontal direction. At this time, the liquid crystal molecules 14 are inclined in predetermined directions by being restricted by the silts 6 and the projections 12 so as to form a plurality of domains within a single pixel. Fig. 2 schematically shows the state in which an electric filed is present between the pixel electrode 4 and the transparent electrode 11.

A first polarizer 15 is laid on the outside of the first substrate 1, and a second polarizer 16 is laid on the outside of the second substrate 8. The first and second polarizers 15 and 16 are so arranged that their transmission axes are perpendicular to each other. When the transmission axes of the polarizers 15 and 16 are at about 45° to the direction in which the liquid crystal molecules 14 are inclined as observed from the direction normal to the second substrate 8, transmission light is transmitted through the second polarizer 16 most efficiently. Since the liquid crystal molecules 14 are inclined at about 90° to the projections 12 and slits 6, the polarizers 15 and 16 are so arranged that the transmission axis of the second polarizer 16 is at about 45° to the direction in which the slits 6 and the projections 12 extend within the pixel. In this embodiment, the transmission axis of the first polarizer 15 coincides with the direction in which the scanning lines 2 extend, and the transmission axis of the second polarizer 16 coincides with the direction in which the signal lines 3 extend.

When no electric field is present between the pixel electrode 4 and the transparent electrode 11, the liquid crystal molecules 14 are aligned vertically. Thus, the linearly polarized transmission light that has been transmitted through the first polarizer 15 is transmitted through the liquid crystal layer 14 intact, i.e., as linearly polarized light, and is then shielded by the second polarizer 16, resulting in black display. On the other hand, when a predetermined voltage is applied to the pixel electrode 4 and an electric field appears between the pixel electrode 4 and the transparent electrode 11, the liquid crystal molecules are inclined in the horizontal direction. Thus, the linearly polarized transmission light that has been transmitted through the first polarizer 15 is converted into elliptically polarized light by the liquid crystal layer 14, and is then transmitted through the second polarizer 16, resulting in white display.

By making the cell gap (the interval between the alignment films 7 and 13 laid on the two substrates 1 and 8) narrower, it is possible to reduce the leakage of light when black is displayed and thereby enhance the contrast and widen the view angle. Through experiments, it was found that, by making the cell gap equal to 3.5 µm or less, it was possible to obtain a view angle of about 56° or more. Making the cell gap narrower results in lowering the transmissivity when white is displayed. According to the present invention, however, the shapes of the slits 6 and the projections 12 and other factors are so worked out as to increase the transmissivity, and this permits the cell gap to be narrowed. In particular, with consideration given to the thicknesses of the electrodes and the alignment films, the height of the projections, and other conditions, by making the cell gap equal to about 3.0 µm to 3.5 µm, it is possible to obtain an optimized liquid crystal display device.

Next, the shapes of the slits 6 and the projections 12 in the first embodiment will be described. The slits 6 are formed by removing parts of the pixel electrodes 4 by a process such as photolithography. The projections 12 are formed, for example, by forming a resist of acrylic resin into a predetermined pattern by a process such as photolithography. Through experiments, it was found that, the higher the projections 12, the higher the transmissivity. Specifically, by making the projections 1.5 µm high or more, it is possible to obtain high transmissivity. In particular, making the projections 1.6 µm high results in about 10 % higher transmissivity than making them 1.3 µm high (transmissivity with the projections 1.6 µm high / transmissivity with the projections 1.3 µm high ≥ 1.10). With consideration given also to the cell gap and other factors, by making the projections about 1.6 µm to about 1.7 µm high, it is possible to obtain transmissivity optimum for a display device. Moreover, forming the projections 12 with a positive material results in higher transmissivity than forming them with a negative material. This is because a positive material gives smoother surface on the projections 12, and thus permits the liquid crystal molecules 14 to be restricted in the inclined direction with higher power. Through experiments, it was found that forming the projections 12 with a positive material resulted in about 10 % higher transmissivity than forming them with a negative material (transmissivity with the projections formed of a positive material / transmissivity with the projections formed of a negative material ≥ 1.10).

The projections 12 are formed in zigzags to extend over a plurality of pixels, and their linear portions extend in directions 45° to the signal lines 3 as seen from the direction normal to the second substrate 8. In a substantially middle portion of a pixel, a projection 12a extending from the adjacent pixel on one side bends at 90° and then extends back to that adjacent pixel, and, in comer portions of the pixel, a projection 12b extending from the adjacent pixel on the other side runs parallel to the linear portions of the projection 12a, which is bent at 90°. At the places where the projections 12 cross the pixel electrode 4, there are formed auxiliary projections 17a that branch off the projections 12 and extend along edge portions of the pixel electrode 4. These auxiliary projections 17a help reduce the influence of the electric fields acting on the liquid crystal molecules 14 from edge portions of the pixel electrode 4 and from the adjacent pixels.

The slits 6 are formed so as to run along the middle between the projections 12, and, in this embodiment, three slits 6 are formed in each pixel electrode 4. Between the projections 12a and 12a are formed slits 6a, and between the projection 12a and an edge portion of the pixel electrode 4 is formed a slit 6b. The center lines (indicated by dash-and-dot lines in the figure) of the slits 6a are parallel to the adjacent projections 12, and run in directions 45° to the signal lines 3. The center lines of the slits 6a correspond to the directions in which the slits 6a extend. The parts of the contours of the slits 6a facing the projections 12, starting at both ends of the slits 6a, extend in directions deviated by about 5° from the center lines of the slits 6a themselves so that the slits 6a are increasingly wide toward a middle portion of the pixel electrode 4. Likewise, the slit 6b extends parallel to the adjacent projections 12a, and the contour of the slit 6a, starting from the ends of the slit 6b parallel to the signal lines 3, extend in directions deviated by about 5° from the directions in which the slit 6b itself extends. The slit 6b also is so formed as to be increasingly wide toward a middle portion of the pixel electrode 4. Since the projection 12a adjacent to the slit 6b bends at a right angle within the pixel, the slit 6b bends likewise.

Reference numeral 17b represents an auxiliary projection that is formed along an edge portion of the pixel electrode 4 close to the slit 6b. The auxiliary projection 17b, like the auxiliary projections 17a, helps reduce the influence of the electric fields acting on the liquid crystal molecules 14 from edge portions of the pixel electrode 4 and from the adjacent pixels. In particular, the area surrounded by the slit 6b and the edge portion of the pixel electrode 4 is narrow, and tends to be influenced greatly by the slit 6b and the edge portion. The auxiliary projection 17a effectively alleviates uneven display ascribable to this area.

When an electric field appears between the pixel electrode 4 and the transparent electrode 11 and thus the liquid crystal molecules 14 are inclined in the horizontal direction, even if the liquid crystal molecules 14 are inclined in directions, for example, 95° to the slits 6 under the influence of the electric fields from the adjacent pixels, since the contours of the slits 6 are not parallel to the direction (45° to the transmission axes) in which they themselves extend but are slightly deviated therefrom, the liquid crystal molecules 14 are eventually inclined in directions about 45° to the transmission axes. This makes it possible to efficiently use the transmission light that is transmitted through the liquid crystal layer. Moreover, the auxiliary projections 17a and 17b help reduce the influence on the liquid crystal molecules 14 in edge portions of the pixel electrode 4. This helps make uniform the difference between the actual and ideal (45° to the transmission axes) inclination directions of the liquid crystal molecules 14 within the pixel, and thus helps alleviate uneven display.

In this embodiment, parts of the contours of the slits 6 are deviated by about 5° from the directions (45° to the transmission axes) in which the slits 6 themselves extend. This correction angle may be any angle in the range from about 3° to about 15°. In particular, as will be understood from the analysis results shown in Fig. 17, the deviations of the inclination direction of most liquid crystal molecules 14 are in the range from about 5° to about 10°, setting the correction angle in the range from about 5° to about 10° helps obtain better result. Furthermore, it is also possible to set different correction angles for the slits 6 to suit the tendency of deviations of the inclination direction, for example, by setting different correction angles within a single slit 6, or by setting different correction angles for different slits 6 formed within a single pixel electrode 4 depending on their location. Since the slits 6 do not restrict the inclination direction of the liquid crystal molecules 14, giving the slits 6 a larger correction angle or making the slits 6 larger by making them wider may lead to uneven display at the corresponding places. For this reason, it is preferable that the slits 6 be made so large as not to cause uneven display.

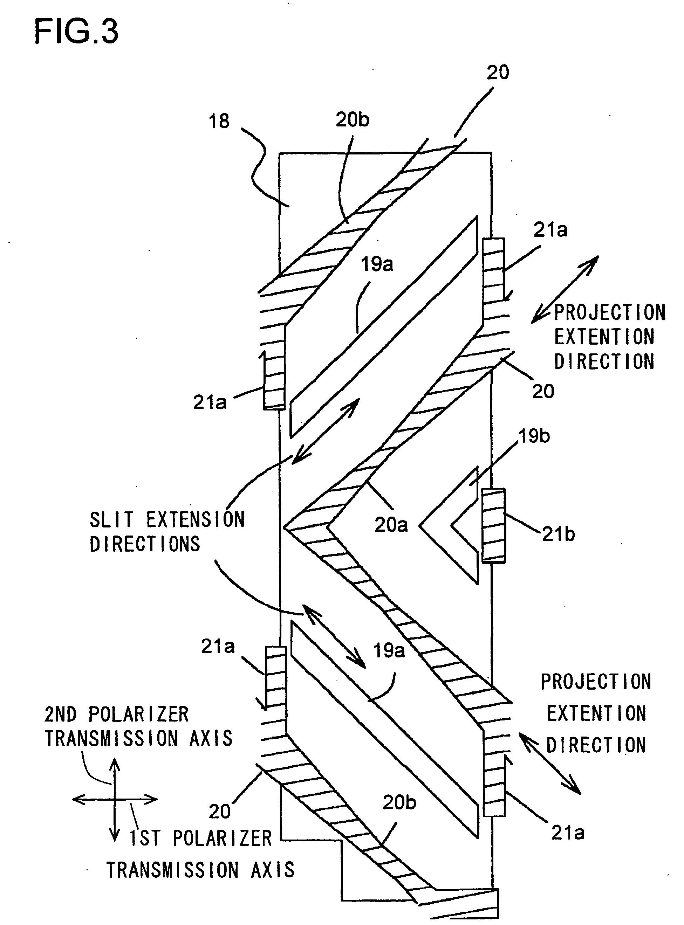

Next, a second embodiment of the invention will be described with reference to Fig. 3. The structure of this embodiment is the same as that of the first embodiment except in the shapes of the projections and the slits. Accordingly, in the following description, such elements as are found also in the first embodiment are identified with the same reference numerals, and their explanations will not be repeated. Fig. 3 is a plan view schematically showing the positional relationship between the pixel electrode and the projections in the second embodiment. Here, slits 19 are formed in the pixel electrode 18, and projections 21 are formed on the second substrate 8.

In the second embodiment, the parts of the contours of the slits facing the projections are parallel to the directions in which the slits themselves extend, and the parts of the contours of the projections facing the slits are formed with a deviation of about 5° from the directions in which the projections themselves extend.

Although only one pixel is shown in Fig. 3, in this embodiment, as in the first embodiment, the projections are formed in zigzags to extend over a plurality of pixels, and their linear portions extend in directions 45° to the transmission axes of the polarizers 15 and 16. In a substantially middle portion of a pixel, a projection 20a extending from the adjacent pixel on one side bends at 90° and then extends back to that adjacent pixel, and, in corner portions of the pixel, a projection 20b extending from the adjacent pixel on the other side runs parallel to the projection 20a, which is bent at a right angle. The contours of the projections 20 are formed with a deviation of about 5° from the directions in which they themselves extend so that the projections 20 are increasingly narrow from edge portions of the pixel electrode to a middle portion thereof. Specifically, the projection 20a is increasingly narrow from an edge portion of the pixel electrode toward the perpendicularly bent portion, and is increasingly wide from a substantially middle portion of the pixel electrode 18 to the perpendicularly bent portion. On the other hand, the projection 20b, in each of two different portions thereof, crosses the pixel electrode 18 in two edge portions thereof, and is increasingly narrow from one edge portion toward the other and is then increasingly wide from halfway on the pixel electrode 18 onward. The shapes of the projections 20 are, on the basis of an analysis of the inclination directions of liquid crystal molecules as observed with the conventional projection shapes, so designed that the liquid crystal molecules are eventually inclined in directions 45° to the transmission axes of the polarizers 15 and 16.

At the places where the projections 20 cross the pixel electrode 18, there are formed auxiliary projections 21a that branch off the projections 20 and extend along edge portions of the pixel electrode 18, and, along an edge portion of the pixel electrode 18 close to the slit 19b, there is formed an auxiliary projection 21b. These auxiliary projections 21a and 21b help reduce the influence of the electric fields acting on the liquid crystal molecules 14 from edge portions of the pixel electrode and from the adjacent pixels.

Between the projections 20a and 20b are formed slits 19a, and between the projection 20a and an edge portion of the pixel electrode 18 is formed a slit 19b. The slits 20a extend in the same directions in which the adjacent projections 20 extend, i.e., in directions 45° to the transparent axes of the polarizers 15 and 16. The parts of the contours of these slits 19a facing the projections 20 run in the same directions in which the slits 19a themselves extend, and thus the slits 19a are each parallelogrammatic in shape. Likewise, the slit 19b extends parallel to the adjacent projection 20a, and the parts of the contour of the slit 19b facing the projections run parallel to the directions in which the slit 19b itself extends.

When an electric field appears between the pixel electrode 4 and the transparent electrode 11 and thus the liquid crystal molecules 14 are inclined in the horizontal direction, even if the liquid crystal molecules 14 are inclined in directions, for example, 95° to the projections 20 under the influence of the electric fields from the adjacent pixels, since the contours of the projections are not parallel to the direction (45° to the transmission axes) in which they themselves extend but are slightly deviated therefrom, the liquid crystal molecules 14 are eventually inclined in directions about 45° to the transmission axes. This makes it possible to efficiently use the transmission light that is transmitted through the liquid crystal layer. Moreover, the auxiliary projections 21a and 21b help reduce the influence on the liquid crystal molecules 14 in edge portions of the pixel electrode 4. This helps make uniform the difference between the actual and ideal (45° to the transmission axes) inclination directions of the liquid crystal molecules 14 within the pixel, and thus helps alleviate uneven display.

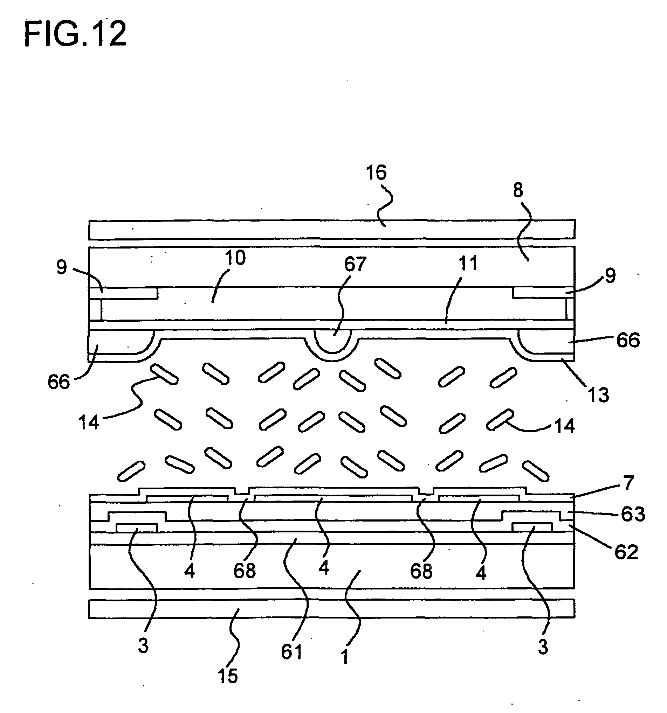

In this embodiment, parts of the contours of the projections 20 are deviated by about 5° from the directions (45° to the transmission axes) in which the projections 20 themselves extend. This correction angle may be any angle in the range from about 3° to about 15°. In particular, as will be understood from the analysis results shown in Fig. 12, the deviations of the inclination direction of most liquid crystal molecules 14 are in the range from about 5° to about 10°, and therefore setting the correction angle in the range from about 5° to about 10° helps obtain better result. Furthermore, it is also possible to set different correction angles for the projections 20 to suit the tendency of deviations of the inclination direction, for example, by setting different correction angles within a single projection 20, or by setting different correction angles for different projections 20 formed within a single pixel electrode 18 depending on their location. Since the projections 20, as opposed to the slits, restrict the inclination direction of the liquid crystal molecules 14, making the projections 20 wider does not seriously aggravate uneven display at the corresponding places. Through experiments, it was found that, assuming the same conditions for the widths of the slits and the projections, inclining the contours of the projections as in the second embodiment resulted in about 12 % higher transmissivity than inclining the contours of the slits as in the first embodiment (transmissivity observed in the second embodiment / transmissivity observed in the first embodiment ≈1.12).

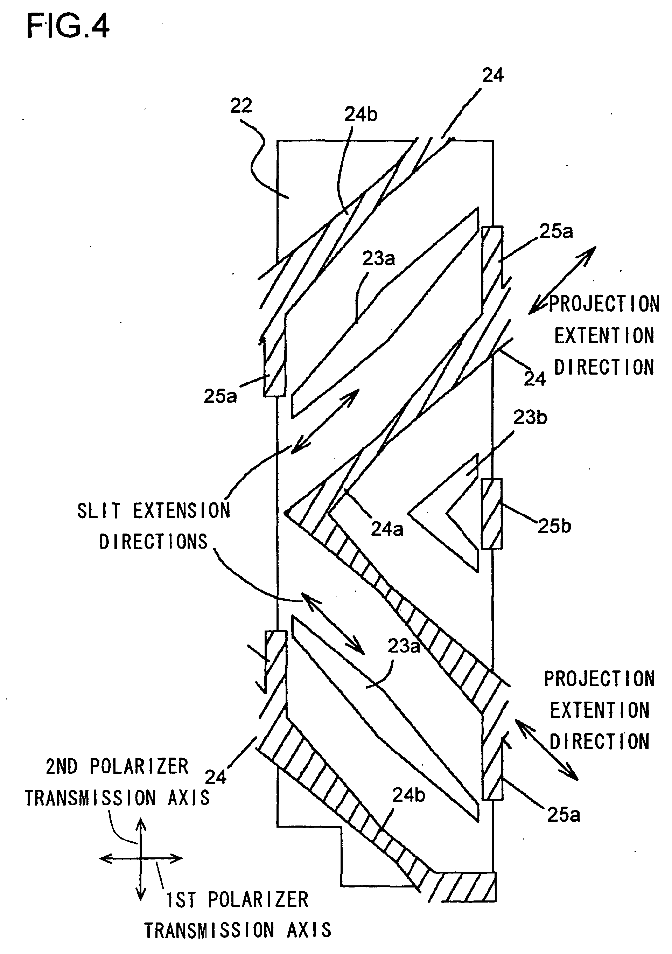

Next, a third embodiment of the invention will be described with reference to Fig. 4. In this embodiment, the slits of the first embodiment are used in combination with the projections of the second embodiment. In other respects, the structure of this embodiment is the same as that of the first embodiment. Accordingly, in the following description, such elements as are found also in the first embodiment are identified with the same reference numerals, and their explanations will not be repeated. Fig. 4 is a plan view schematically showing the positional relationship between the pixel electrode and the projections in the third embodiment. Here, slits 23 are formed in the pixel electrode 22 and projections 24 are formed on the second substrate 8.

The projections 24 of the third embodiment have the same shape as the projections 21 of the second embodiment. Specifically, the projections 24 are formed in zigzags to extend over a plurality of pixels, and their substantially linear portions extend in directions 45° to the transmission axes of the polarizers 15 and 16. A projection 24a bends at a right angle in a middle portion of the pixel electrode, and a projection 24b runs parallel to the projection 24a in comer portions of the pixel electrode 22. The parts of the contours of the projections 24 facing the slits 23 are formed with a deviation of about 5° from the directions in which the projections 24 themselves extend. Thus, the projections 24 are increasingly narrow from edge portions of the pixel electrode 22 to a middle portion thereof.

Reference numeral 25a represents auxiliary projections that branch off the projections 24 and extend along edge portions of the pixel electrode 22, and reference numeral 25b represents an auxiliary projection formed along an edge portion of the pixel electrode 18 close to the slit 23b. These auxiliary projections 25a and 25b help reduce the influence of the electric fields acting on the liquid crystal molecules 14 from edge portions of the pixel electrode 22 and from the adjacent pixels.

The slits 23 of the third embodiment have the same shape as the slits 6 of the first embodiment. Specifically, the slits 23 are so formed as to run along the middle between the projections 24. Between the projections 24a and 24b are formed slits 23a, and between the projection 24a and an edge portion of the pixel electrode 22 is formed a slit 23b. The slits 23 are formed so as to extend parallel to the directions in which the adjacent projections 24 extend, and the parts of the contours of the slits 23 facing the projections 24 are formed with a deviation of about 5° from the directions in which the slits 23 themselves extend.

When the liquid crystal molecules 14 are inclined in the horizontal direction, even if the liquid crystal molecules 14 are inclined in directions, for example, 95° to the projections 24 and the slits 23 under the influence of the electric fields from the adjacent pixels, the liquid crystal molecules 14 are eventually inclined in directions about 45° to the transmission axes. This makes it possible to efficiently use the transmission light that is transmitted through the liquid crystal layer. Moreover, the auxiliary projections 25a and 25b help reduce the influence on the liquid crystal molecules 14 in edge portions of the pixel electrode 22. This helps make uniform the difference between the actual and ideal (45° to the transmission axes) inclination directions of the liquid crystal molecules 14 within the pixel, and thus helps alleviate uneven display.

The correction angle for parts of the contours of the slits 23 and the projections 24 may be any angle in the range from about 3° to about 15°. In particular, setting the correction angle in the range from about 5° to about 10° helps obtain better result. Moreover, by adjusting the widths of the slits 23 and the projections 24, it is possible to alleviate uneven display. Through experiments, it was found that, assuming the same conditions for the widths of the slits and the projections, the third embodiment offered about 9 % higher transmissivity than the first embodiment (transmissivity observed in the third embodiment / transmissivity observed in the first embodiment = 1.09).

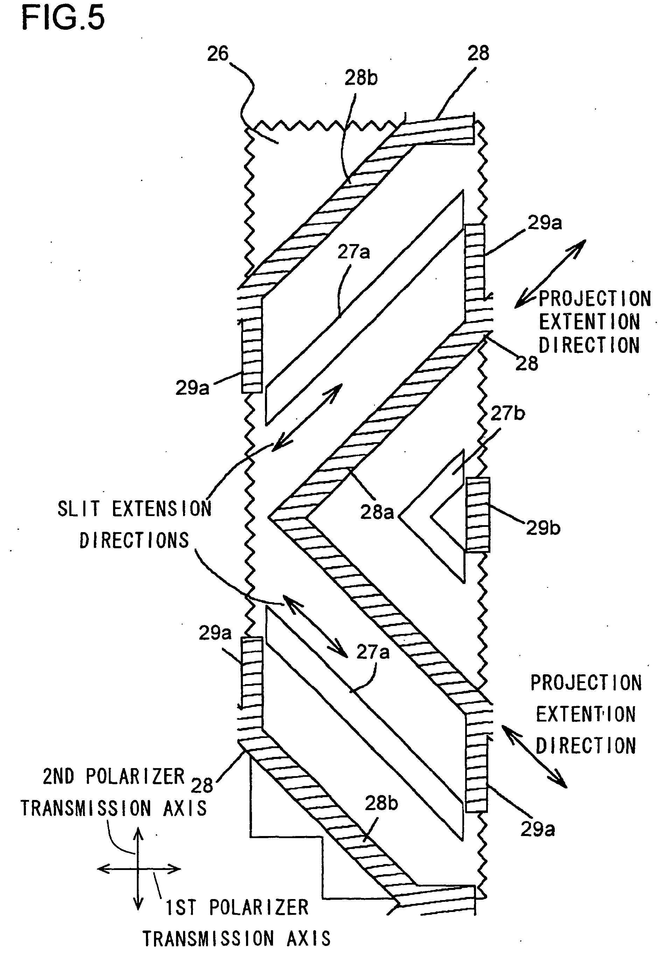

Next, a fourth embodiment of the invention will be described with reference to Fig. 5. The structure of this embodiment is the same as that of the first embodiment except in the shape of the pixel electrode including the slits formed therein. Accordingly, in the following description, such elements as are found also in the first embodiment are identified with the same reference numerals, and their explanations will not be repeated. Fig. 5 is a plan view schematically showing the positional relationship between the pixel electrode and the projections in the fourth embodiment. Here, slits 27 are formed in the pixel electrode 26, and projections 28 are formed on the second substrate 8.

The projections 28 are formed in zigzags over a plurality of pixels, and their linear portions extend in directions 45° to the transmission axes of the polarizers 15 and 16 as seen from the direction normal to the second substrate 8. In a substantially middle portion of a pixel, a projection 28a extending from the adjacent pixel on one side bends at 90° and then extends back to that adjacent pixel, and; in comer portions of the pixel, a projection 28b extending from the adjacent pixel on the other side runs parallel to the linear portions of the projection 28a, which is bent at a right angle.

At the places where the projections 28 cross the pixel electrode 26, there are formed auxiliary projections 29a that branch off the projections 28 and extend along edge portions of the pixel electrode 26, and, along an edge portion of the pixel electrode 26 close to the slit 27b, there is formed an auxiliary projection 29b. These auxiliary projections 29a and 29b help reduce the influence of the electric fields acting on the liquid crystal molecules 14 from edge portions of the pixel electrode 26 and from the adjacent pixels.

Between the projections 28a and 28b are formed slits 27a, and between the projection 28a and an edge portion of the pixel electrode 26 is formed a slit 27b. The slits 27a extend in the same directions in which the adjacent projections 28 extend, i.e., in directions 45° to the transparent axes of the polarizers 15 and 16. The parts of the contours of these slits facing the projections 28 run in the same directions in which the slits themselves extend, and thus the slits are each parallelogrammatic in shape. Likewise, the slit 27b extends parallel to the adjacent projection 28a, and the parts of the contour of the slit 27b facing the projections 28 run parallel to the directions in which the slit 27b itself extends.

In this embodiment, a peripheral portion of the pixel electrode 26 is formed in a sawtooth shape so that the influence of edge portions of the pixel electrode 26 on the liquid crystal molecules 14 is alleviated by being canceled out among different edge portions. The peripheral portion also serves to alleviate the influence of the electric fields acting from the adjacent pixels on the liquid crystal molecules 14 within the pixel electrode 26. The sawtooth-shaped portion is most effectively formed at places where the influence from the adjacent pixels and from edge portions of the pixel electrode 26 is great, preferably in edge portions located between the projections 28 and the slits 27 and in edge portions along the longer sides of the pixel electrode 26.

When the liquid crystal molecules 14 are inclined in the horizontal direction, the influence of the electric fields acting on the liquid crystal molecules 14 from the adjacent pixels and from edge portions of the pixel electrode 26 is alleviated by the sawtooth-shaped portion of the pixel electrode 26, so that the liquid crystal molecules 14 within the pixel electrode 26 are inclined in directions about 45° to the transparent axes. This makes it possible to efficiently use the transmission light that is transmitted through the liquid crystal layer. Moreover, the auxiliary projections 29a and 29b help further reduce the influence on the liquid crystal molecules 14 in edge portions of the pixel electrode 26. This helps make uniform the difference between the actual and ideal (45° to the transmission axes) inclination directions of the liquid crystal molecules 14 within the pixel, and thus helps alleviate uneven display.

The peripheral portion of the pixel electrode may be given any other shape than a sawtooth shape so long as it can cancel out the influence of the peripheral portion; for example, the peripheral portion may be given a wave-like shape with a pattern consisting of a series of small arcs joined together. Through experiments, it was found that, assuming the same conditions for the widths of the slits and the projections, the fourth embodiment offered about 8 % higher transmissivity than the first embodiment (transmissivity observed in the fourth embodiment / transmissivity observed in the first embodiment ≈ 1.08).

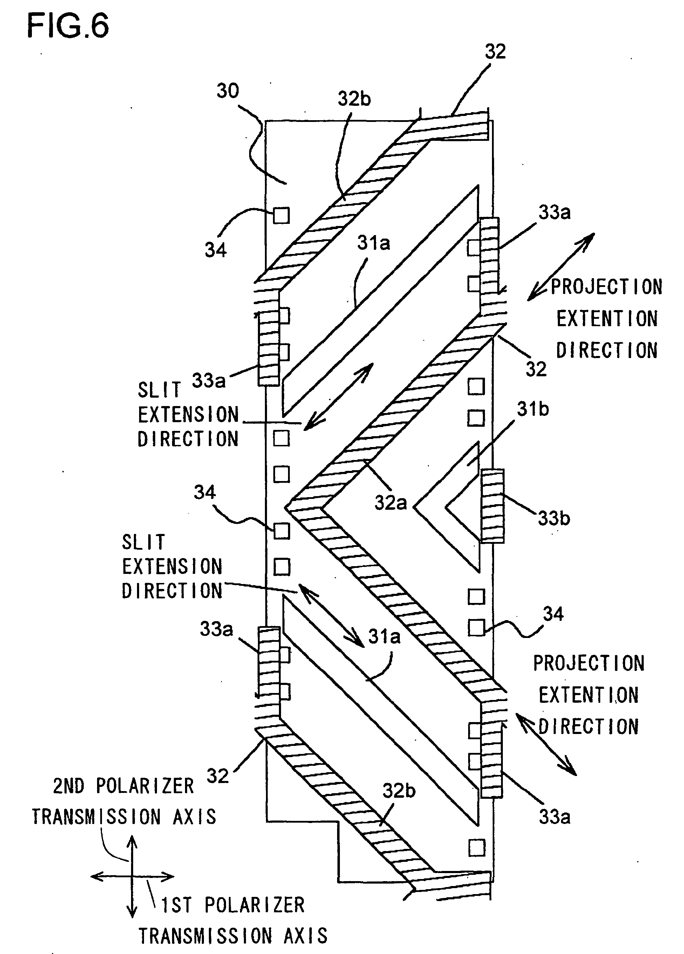

Next, a fifth embodiment of the invention will be described with reference to Fig. 6. The structure of this embodiment is the same as that of the first embodiment except in the shape of the pixel electrode including the slits formed therein. Accordingly, in the following description, such elements as are found also in the first embodiment are identified with the same reference numerals, and their explanations will not be repeated. Fig. 6 is a plan view schematically showing the positional relationship between the pixel electrode and the projections in the fifth embodiment. Here, slits 31 are formed in the pixel electrode 30, and projections 32 are formed on the second substrate 8.

The projections 32 are formed in zigzags over a plurality of pixels, and their linear portions extend in directions 45° to the transmission axes of the polarizers 15 and 16 as seen from the direction normal to the second substrate 8. In a substantially middle portion of a pixel, a projection 32a extending from the adjacent pixel on one side bends at 90° and then extends back to that adjacent pixel, and, in comer portions of the pixel, a projection 32b extending from the adjacent pixel on the other side runs parallel to the linear portions of the projection 32a, which is bent at a right angle.

At the places where the projections 32 cross the pixel electrode 30, there are formed auxiliary projections 33a that branch off the projections 32 and extend along edge portions of the pixel electrode 30, and, along an edge portion of the pixel electrode 30 close to the slit 31b, there is formed an auxiliary projection 33b. These auxiliary projections 33a and 33b help reduce the influence of the electric fields acting on the liquid crystal molecules 14 from edge portions of the pixel electrode 30 and from the adjacent pixels.

Between the projections 32a and 32b are formed slits 31a, and between the projection 32a and an edge portion of the pixel electrode 30 is formed a slit 31b. The slits 31a extend in the same directions in which the adjacent projections 32 extend, i.e., in directions 45° to the transparent axes of the polarizers 15 and 16. The parts of the contours of these slits facing the projections 32 run in the same directions in which the slits themselves extend, and thus the slits are each parallelogrammatic in shape. Likewise, the slit 31b extends parallel to the adjacent projection 32a, and the parts of the contour of the slit 31b facing the projections 32 run parallel to the directions in which the slit 31b itself extends.

In this embodiment, in a peripheral portion of the pixel electrode 30, there are formed pin holes 34 in order to reduce the influence of edge portions of the pixel electrode 30 on the liquid crystal molecules 14. The pin holes are each square in shape, and are formed in pairs of two between the slits 31 and the projections 32 along a peripheral portion of the pixel electrode 30. These pin holes 34 are formed at the same time that the slits 31 are formed in the pixel electrode 30, and are formed, like the slits 31, by removing parts of the pixel electrode 30 by a process such as lithography. The pin holes 34 disturb the directions of electric fields, and thus cancel out and thereby alleviate the influence of edge portions of the pixel electrode 30 and the like.

When the liquid crystal molecules 14 are inclined in the horizontal direction, the influence of the electric fields acting on the liquid crystal molecules 14 from the adjacent pixels and from edge portions of the pixel electrode 30 is alleviated by the pin holes 34 of the pixel electrode 30, so that the liquid crystal molecules 14 within the pixel electrode 30 are inclined in directions about 45° to the transparent axes. This makes it possible to efficiently use the transmission light that is transmitted through the liquid crystal layer. Moreover, the auxiliary projections 33a and 33b help further reduce the influence on the liquid crystal molecules 14 in edge portions of the pixel electrode 30. This helps make uniform the difference between the actual and ideal (45° to the transmission axes) inclination directions of the liquid crystal molecules 14 within the pixel, and thus helps alleviate uneven display.

The pin holes 34 may be formed in any other shape than a square shape so long as they can cancel out the influence of the peripheral portion of the pixel electrode; that is, the number of pin holes and their shape may be modified as necessary. Through experiments, it was found that, assuming the same conditions for the widths of the slits and the projections, the fifth embodiment offered about 7 % higher transmissivity than the first embodiment (transmissivity observed in the fifth embodiment / transmissivity observed in the first embodiment ≈ 1. 07).

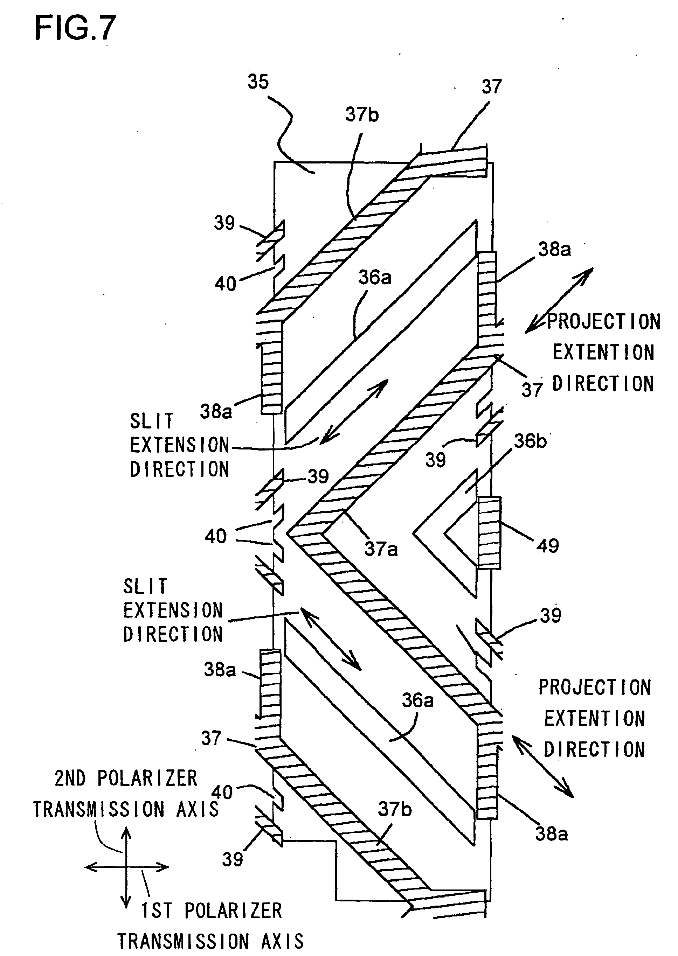

Next, a sixth embodiment of the invention will be described with reference to Fig. 7. The structure of this embodiment is the same as that of the first embodiment except in the shapes of the slits and the projections. Accordingly, in the following description, such elements as are found also in the first embodiment are identified with the same reference numerals, and their explanations will not be repeated. Fig. 7 is a plan view schematically showing the positional relationship between the pixel electrode and the projections in the sixth embodiment. Here, slits 36 are formed in the pixel electrode 35, and projections 37 are formed on the second substrate 8.

The projections 37 are formed in zigzags over a plurality of pixels, and their linear portions extend in directions 45° to the transmission axes of the polarizers 15 and 16 as seen from the direction normal to the second substrate 8. In a substantially middle portion of a pixel, a projection 37a extending from the adjacent pixel on one side bends at 90° and then extends back to that adjacent pixel, and, in comer portions of the pixel, a projection 37b extending from the adjacent pixel on the other side runs parallel to the linear portions of the projection 37a, which is bent at a right angle. Reference numeral 39 represents second projections that are narrower than the projections 37 and that extend in the same direction in which the adjacent projections 37 extend. The second projections 39 are formed near edge portions of the pixel electrode 35.

At the places where the projections 37 cross the pixel electrode 35, there are formed auxiliary projections 38a that branch off the projections 37 and extend along edge portions of the pixel electrode 35, and, along an edge portion of the pixel electrode 35 close to the slit 36b, there is formed an auxiliary projection 38b. These auxiliary projections 38a and 38b help reduce the influence of the electric fields acting on the liquid crystal molecules 14 from edge portions of the pixel electrode 35 and from the adjacent pixels.

Between the projections 37a and 37b are formed slits 36a, and between the projection 37a and an edge portion of the pixel electrode 35 is formed a slit 36b. The slits 36a extend in the same directions in which the adjacent projections 37 extend, i.e., in directions 45° to the transparent axes of the polarizers 15 and 16. The parts of the contours of these slits facing the projections 37 run in the same directions in which the slits themselves extend, and thus the slits are each parallelogrammatic in shape. Likewise, the slit 36b extends parallel to the adjacent projection 37a, and the parts of the contour of the slit 36b facing the projections 37 run parallel to the directions in which the slit 36b itself extends. Reference numeral 40 represents second slits that are narrower than the slits 36 and that are formed from edge portions of the pixel electrode 35 toward a middle portion thereof. The second slits 40 are formed parallel to the adjacent second projections 39. The second projections 39 and the second slits 40 are formed in pairs, and are formed between the projections 37 and the slits 36 and between the projections 37 and comer portions of the pixel electrode 35, with the second slits 40 located between the projections 37 and the second projections 39. The second projections 39 and the second slits 40 are located near edge portions of the pixel electrode 35 so as to reduce the influence of edge portions of the pixel electrode 35 on the inclination directions of the liquid crystal molecules 14. Accordingly, the second projections 39 and the second slits 40 do not extend up to a middle portion of the pixel electrode 35.

When the liquid crystal molecules 14 are inclined in the horizontal direction, the influence of the electric fields acting on the liquid crystal molecules 14 from the adjacent pixels and from edge portions of the pixel electrode 30 is alleviated by the second projections 39 and the second slits 40, so that the liquid crystal molecules 14 within the pixel electrode 35 are inclined in directions about 45° to the transparent axes. This makes it possible to efficiently use the transmission light that is transmitted through the liquid crystal layer. Moreover, the auxiliary projections 38a and 38b help further reduce the influence on the liquid crystal molecules 14 in edge portions of the pixel electrode 35. This helps make uniform the difference between the actual and ideal (45° to the transmission axes) inclination directions of the liquid crystal molecules 14 within the pixel, and thus helps alleviate uneven display.

The sizes and shapes of the second projections and the second slits and the positions in which they are formed may be modified as necessary so long as they can cancel out the influence of the peripheral portion of the pixel electrode. For example, the second projections and the second slits may be formed in different sizes. Through experiments, it was found that, assuming the same conditions for the widths of the slits and the projections, the sixth embodiment offered about 7 % higher transmissivity than the first embodiment (transmissivity observed in the sixth embodiment / transmissivity observed in the first embodiment ≈ 1.07).

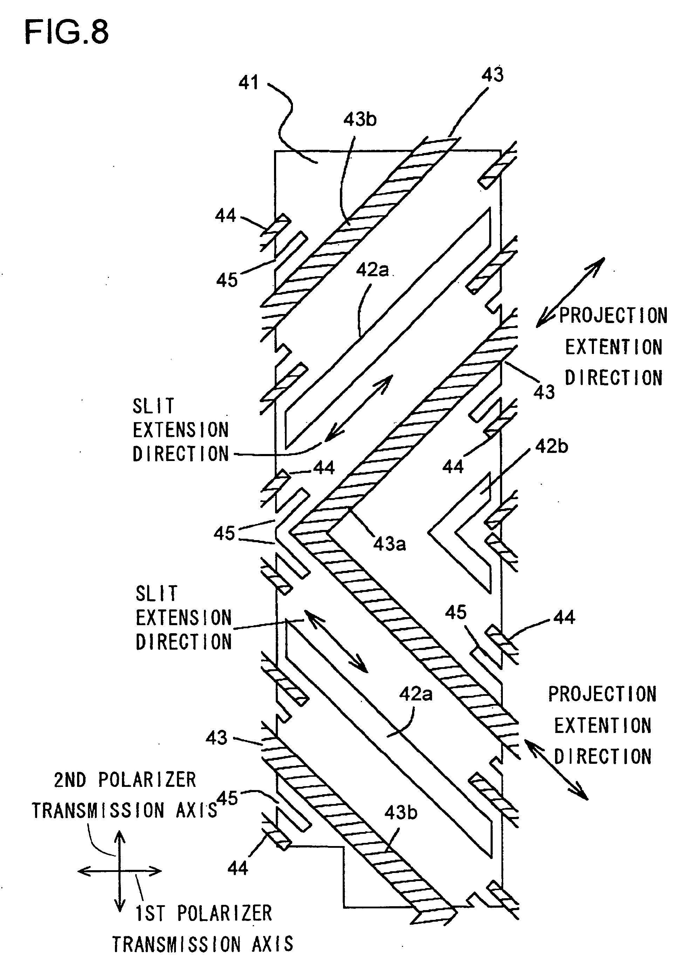

Next, a seventh embodiment of the invention will be described with reference to Fig. 8. The structure of this embodiment is the same as that of the first embodiment except in the shapes of the slits and the projections. Accordingly, in the following description, such elements as are found also in the first embodiment are identified with the same reference numerals, and their explanations will not be repeated. Fig. 8 is a plan view schematically showing the positional relationship between the pixel electrode and the projections in the seventh embodiment. Here, slits 42 are formed in the pixel electrode 41, and projections 43 are formed on the second substrate 8.

The projections 43 are formed in zigzags over a plurality of pixels, and their linear portions extend in directions 45° to the transmission axes of the polarizers 15 and 16 as seen from the direction normal to the second substrate 8. In a substantially middle portion of a pixel, a projection 43a extending from the adjacent pixel on one side bends at 90° and then extends back to that adjacent pixel, and, in comer portions of the pixel, a projection 43b extending from the adjacent pixel on the other side runs parallel to the linear portions of the projection 43a, which is bent at a right angle. Reference numeral 44 represents second projections that are narrower than the projections 43 and that extend in the same direction in which the adjacent projections 43 extend. The second projections 44 are formed near edge portions of the pixel electrode 41.

Between the projections 43a and 43b are formed slits 42a, and between the projection 43a and an edge portion of the pixel electrode 41 is formed a slit 42b. The slits 42a extend in the same directions in which the adjacent projections 43 extend, i.e., in directions 45° to the transparent axes of the polarizers 15 and 16. The parts of the contours of these slits facing the projections 43 run in the same directions in which the slits themselves extend, and thus the slits are each substantially parallelogrammatic in shape. Likewise, the slit 42b extends parallel to the adjacent projection 43a, and the parts of the contour of the slit 42b facing the projections 43 run parallel to the directions in which the slit 42b itself extends.

Reference numeral 45 represents second slits that are narrower than the slits 42 and that are formed from edge portions of the pixel electrode 41 toward a middle portion thereof. The second slits 45 are formed parallel to the adjacent second projections 44. The second projections 44 and the second slits 45 are formed in pairs, and are formed between the projections 44 and the slits 45 and between the projections 43 and comer portions of the pixel electrode 41, with the second slits 45 located between the projections 43 and the second projections 44. One of the second projection 44 and the second slit 45 forming each pair extends toward a middle portion of the pixel electrode 41, and which of them does so alternates from one pair to the next along a peripheral portion of the pixel electrode 41. Moreover, the ends of the second projections 44 and the second slits 45 are not parallel to edge portions of the pixel electrode 41, but are perpendicular to the directions in which they extend. The second projections 44 and the second slits 45 are located near edge portions of the pixel electrode 41 so as to reduce the influence of edge portions of the pixel electrode 41 on the inclination directions of the liquid crystal molecules 14. Accordingly, the second projections 44 and the second slits 45 do not extend up to a middle portion of the pixel electrode 41.

When the liquid crystal molecules 14 are inclined in the horizontal direction, the influence of the electric fields acting on the liquid crystal molecules 14 from the adjacent pixels and from edge portions of the pixel electrode 41 is alleviated by the second projections 44 and the second slits 45, so that the liquid crystal molecules 14 within the pixel electrode 41 are inclined in directions about 45° to the transparent axes. This makes it possible to efficiently use the transmission light that is transmitted through the liquid crystal layer.

The sizes and shapes of the second projections and the second slits and the positions in which they are formed may be modified as necessary so long as they can cancel out the influence of the peripheral portion of the pixel electrode. For example, the second projections and the second slits may be formed in the same size, or the ends of the second projections and the second slits may be made parallel to edge portions of the pixel electrode.

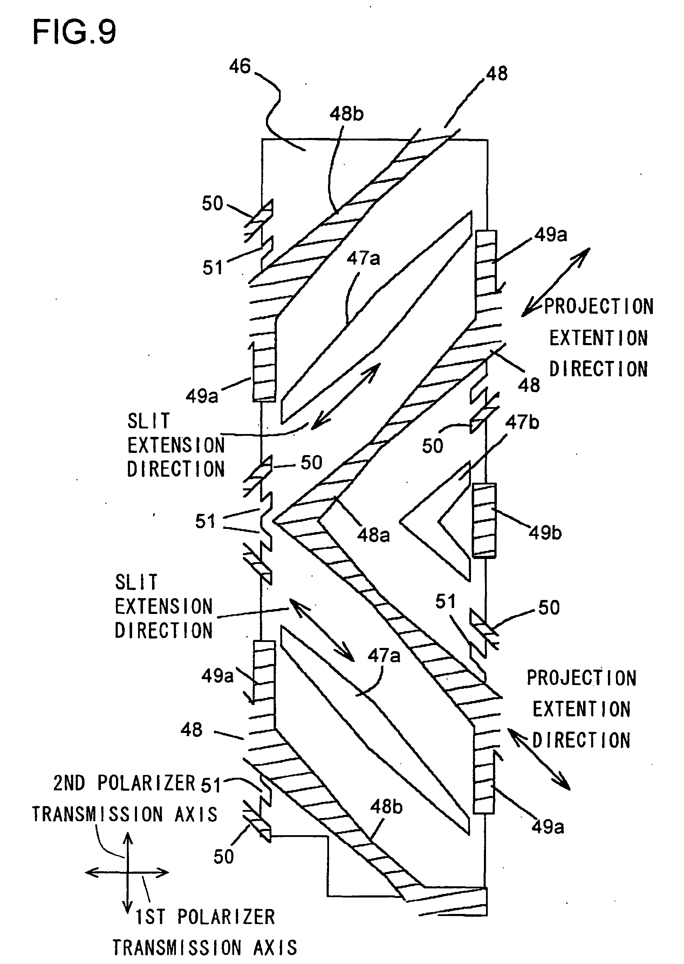

Next, an eighth embodiment of the invention will be described with reference to Fig. 9. In this embodiment, the shapes of the slits and the projections of the third embodiment are used in combination with the second projections and the second slits of the sixth embodiment. In other respects, the structure of this embodiment is the same as that of the first embodiment. Accordingly, in the following description, such elements as are found also in the first embodiment are identified with the same reference numerals, and their explanations will not be repeated. Fig. 9 is a plan view schematically showing the positional relationship between the pixel electrode and the projections in the eighth embodiment. Here, slits 47 and second slits 51 are formed in the pixel electrode 46 and projections 48 and second projections 50 are formed on the second substrate 8.

The projections 48 are formed in zigzags to extend over a plurality of pixels, and their substantially linear portions extend in directions 45° to the transmission axes of the polarizers 15 and 16. A projection 48a bends at a right angle in a middle portion of the pixel electrode 46, and a projection 48b runs parallel to the projection 48a in comer portions of the pixel electrode 46. The parts of the contours of the projections 48 facing the slits 47 are formed with a deviation of about 5° from the directions in which the projections 48 themselves extend. Thus, the projections 48 are increasingly narrow from edge portions of the pixel electrode 46 to a middle portion thereof.

Reference numeral 49a represents auxiliary projections that branch off the projections 48 and extend along edge portions of the pixel electrode 46, and reference numeral 49b represents an auxiliary projection formed along an edge portion of the pixel electrode 46 close to the slit 47b. These auxiliary projections 49a and 49b help the influence of the electric fields acting on the liquid crystal molecules 14 from edge portions of the pixel electrode 46 and from the adjacent pixels.

The slits 47 are so formed as to run along the middle between the projections 48. Between the projections 48a and 48b are formed slits 47a, and between the projection 48a and an edge portion of the pixel electrode 46 is formed a slit 47b. The slits 47 are formed so as to extend parallel to the directions in which the adjacent projections 48 extend, and the parts of the contours of the slits 47 facing the projections 48 are formed with a deviation of about 5° from the directions in which the slits 47 themselves extend.

Reference numeral 50 represents second projections that are narrower than the projections 48 and that extend in the same direction in which the adjacent projections 48 extend. Reference numeral 51 represents second slits that are narrower than the slits 47 and that run parallel to the adjacent second projections 50. The second projections 50 and the second slits 51 are formed in pairs, and are formed near edge portions of the pixel electrode 46, more specifically between the projections 48 and the slits 47 and between the projections 48 and edge corner portions of the pixel electrode 46.

When the liquid crystal molecules 14 are inclined in the horizontal direction, the influence of the electric fields acting on the liquid crystal molecules 14 from the adjacent pixels and from edge portions of the pixel electrode 46 is alleviated by the second projections 50 and the second slits 51. Moreover, even if, under the influence of those electric fields, the liquid crystal molecules 14 are inclined in directions other than 90° to the projections 48 and the slits 47, the liquid crystal molecules 14 are eventually inclined in directions about 45° to the transmission axes. This makes it possible to efficiently use the transmission light that is transmitted through the liquid crystal layer. Furthermore, the auxiliary projections 49a and 49b alleviate the influence of edge portions of the pixel electrode 46 on the liquid crystal molecules 14. This helps make uniform the difference between the actual and ideal (45° to the transmission axes) inclination directions of the liquid crystal molecules 14 within the pixel, and thus helps alleviate uneven display.

The correction angle for parts of the contours of the slits 47 and the projections 48 may be any angle in the range from about 3° to about 15°. In particular, setting the correction angle in the range from about 5° to about 10° helps obtain better result. Moreover, by adjusting the widths of the slits 47 and the projections 48, it is possible to alleviate uneven display.

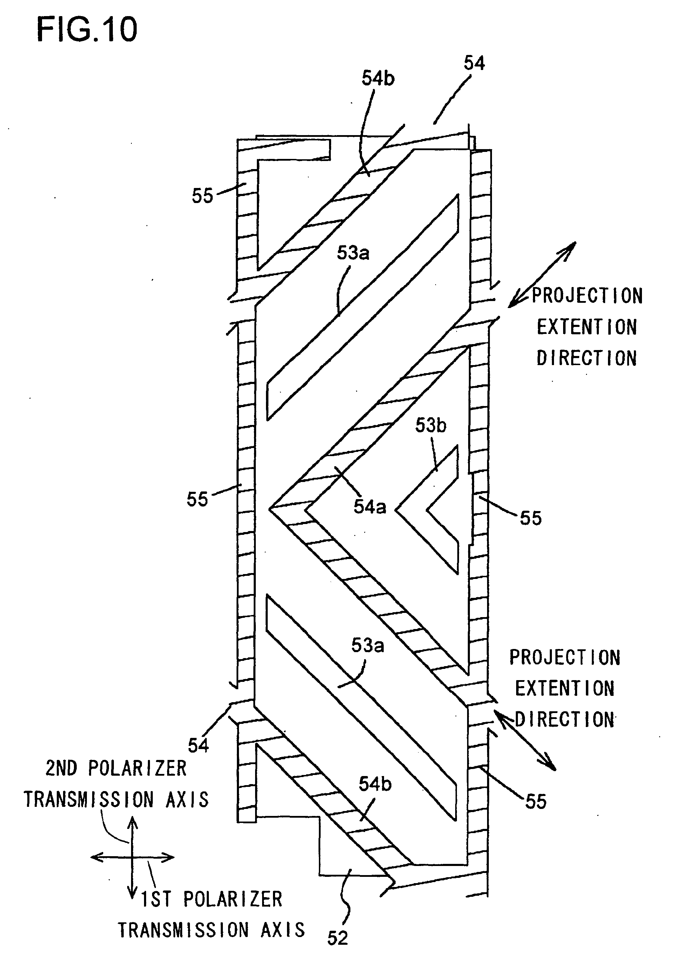

Next, a ninth embodiment of the invention will be described with reference to Fig. 10. The structure of this embodiment is the same as that of the first embodiment except in the shapes of the slits and the projections. Accordingly, in the following description, such elements as are found also in the first embodiment are identified with the same reference numerals, and their explanations will not be repeated. Fig. 10 is a plan view schematically showing the positional relationship between the pixel electrode and the projections in the ninth embodiment. Here, slits 53 are formed in the pixel electrode 52, and projections 54 are formed on the second substrate 8.

The projections 54 are formed in zigzags over a plurality of pixels, and their linear portions extend in directions 45° to the transmission axes of the polarizers 15 and 16 as seen from the direction normal to the second substrate 8. In a substantially middle portion of a pixel, a projection 54a extending from the adjacent pixel on one side bends at 90° and then extends back to that adjacent pixel, and, in comer portions of the pixel, a projection 54b extending from the adjacent pixel on the other side runs parallel to the linear portions of the projection 54a, which is bent at a right angle. Reference numeral 55 represents auxiliary projections that branch off the projections 54 and that extend along a peripheral portion of the pixel electrode 52. The auxiliary projections 55 help reduce the influence of the electric fields acting on the liquid crystal molecules 14 from edge portions of the pixel electrode 52 and from the adjacent pixels.

Between the projections 54a and 54b are formed slits 53a, and between the projection 54a and an edge portion of the pixel electrode 52 is formed a slit 53b. The slits 53a extend in the same directions in which the adjacent projections 54 extend, i.e., in directions 45° to the transparent axes of the polarizers 15 and 16. The parts of the contours of these slits facing the projections 54 extend in the same directions in which the slits themselves extend, and thus the slits are each parallelogrammatic in shape. Likewise, the slit 53b extends parallel to the adjacent projection 54a, and the parts of the contour of the slit 53b facing the projections 54 run parallel to the directions in which the slit 53b itself extends.

When the liquid crystal molecules 14 are inclined in the horizontal direction, the influence of the electric fields acting on the liquid crystal molecules 14 from the adjacent pixels and from edge portions of the pixel electrode 52 is alleviated by the auxiliary projections 55. Thus, the liquid crystal molecules 14 within the pixel electrode 52 are eventually inclined in directions about 45° to the transmission axes. This makes it possible to efficiently use the transmission light that is transmitted through the liquid crystal layer. Moreover, it is possible to make uniform the difference between the actual and ideal (45° to the transmission axes) inclination directions of the liquid crystal molecules 14 within the pixel, and thereby alleviate uneven display.

The auxiliary projections 55 may be formed, instead of all around a peripheral portion of the pixel electrode 52, only at places where the influence of edge portions of the pixel electrode 52 is great, so long as the auxiliary projections 55 help reduce the influence of the peripheral portion of the pixel electrode 52.

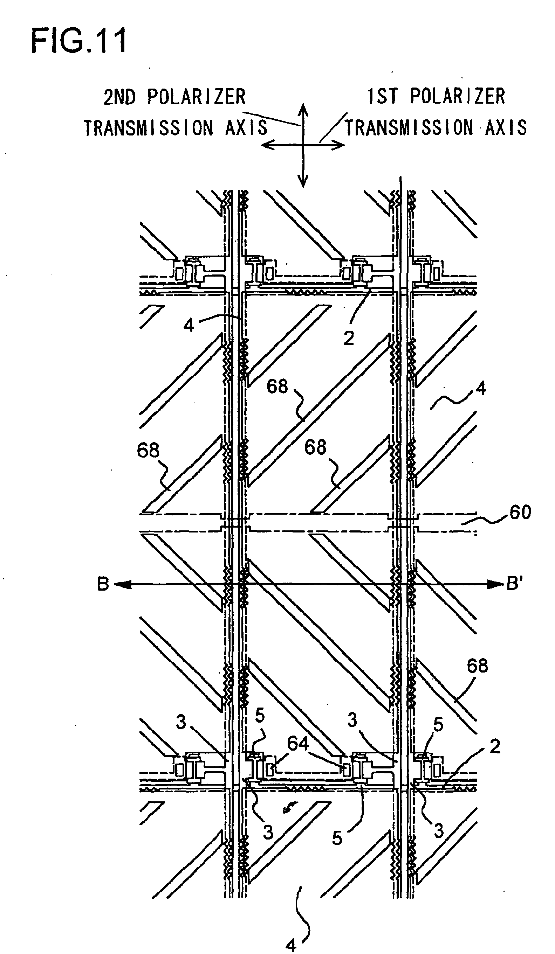

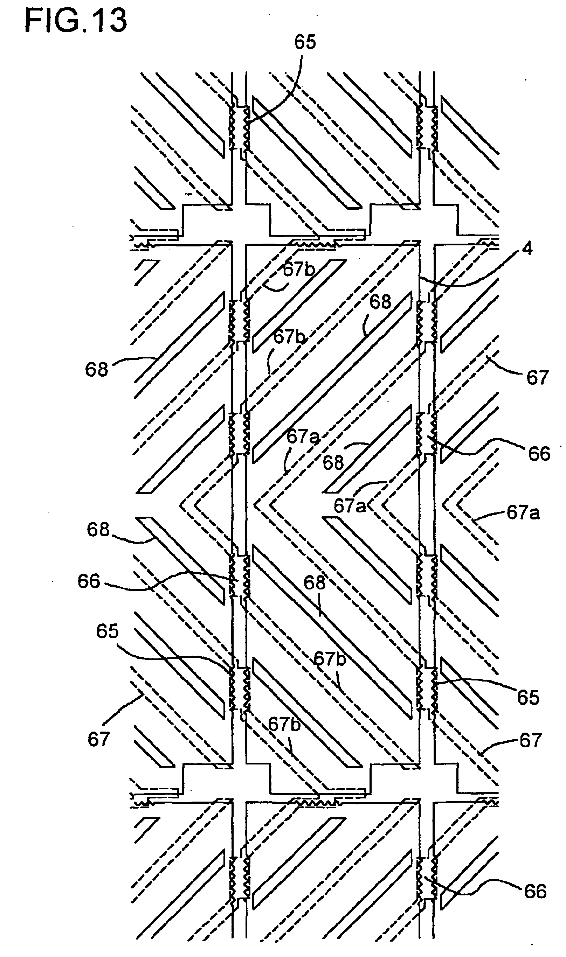

Next, a tenth embodiment of the invention will be descried with reference to the drawings. The structure of this embodiment resembles that of the fourth embodiment, and therefore, in the following description, such elements as are found also in the fourth embodiment are identified with the same reference numerals. In this embodiment, the sawtooth-shaped portion of the pixel electrode 4 is formed in discrete edge portions thereof. Moreover, the insulating film between the signal lines 3 and the pixel electrode 4 is doubly laid, and a peripheral portion of the pixels electrode 4 overlaps the signal lines 3. Fig. 11 is a plan view of the first substrate with the pixel electrode of the tenth embodiment, Fig. 12 is a sectional view taken along line B-B' shown in Fig. 11, and Fig. 13 is a diagram schematically showing the relationship between the projections and the slits of the pixel electrode.

Reference numeral 60 represents auxiliary capacitance electrode lines, which are formed at the same time that the scanning lines 2 are formed. The scanning lines 2 and the auxiliary capacitance electrode lines 60 are laid parallel to each other and at substantially equal intervals on the first substrate 1. Reference numeral 61 represents a gate insulation film laid on top of the scanning lines 2 and the auxiliary capacitance electrode lines 60. On the gate insulation film 61 are formed the signal lines 3, which are formed of aluminum, chromium, or the like. These signal lines 3 are laid perpendicularly to the scanning lines 2. The areas surrounded by the scanning lines 2 and the signal lines 3 each correspond to one pixel. For each pixel, there is formed a pixel electrode 4, which is formed of ITO or IZO (indium zinc oxide). At the intersections between the scanning lines 2 and the signal lines 3, there are formed TFTs 5 as switching devices. In this embodiment, each pixel is provided with two signal lines 3, and each pixel electrode 4 is connected to two TFTs 5. Thus, in the fabrication process, even if one TFT happens to be defective, the pixel electrode 4 can be operated by way of the other TFT 5. This ensures an improved yield.

Reference numeral 62 represents a first protective film that covers the signal lines 3 and the TFTs 5, and reference numeral 63 represents a second protective film laid on top of the first protective film 62. The pixel electrodes 4 are formed on top of the second protective film 63. For example, the second protective film 63 may be given a flat surface so as to act as a flattening film; alternatively, the first protective film 62 may be formed as an inorganic insulating film and the second protective film 63 as an organic insulating film. Through the two protective films 62 and 63, there are formed contact holes 64 in portions thereof corresponding to the drain electrodes of the TFTs 5, and, through these contact holes 64, the pixel electrodes 4 and the drain electrodes are electrically connected together. On the gate insulation film 61, there are formed insular electrodes (not shown) in portions thereof facing the auxiliary capacitance electrode lines 60. These insular electrodes are formed of the same material and at the same time as the signal lines 3. The insular electrodes are electrically connected, through the contact holes 64 formed through the two protective layers 62 and 63, to the pixel electrodes 4 so that the insulating electrodes and the auxiliary capacitance electrode lines 60 together produce auxiliary capacitance in each pixel. Edge portions of the pixel electrodes 4, as observed from the direction normal to the first substrate 1, partially overlap the scanning lines 2 and the signal lines 3. Within each pixel electrode 4, there are formed a plurality of slits, which will be described later. Fig. 12 schematically shows the state in which an electric field is present between the pixel electrode 4 and the transparent electrode 11.

Next, the shapes of the slits 68 and the projections 67 in the tenth embodiment will be described. In Fig. 13, the projections 67 are indicated by broken lines.

Within each pixel, there are formed a plurality of strip-shaped projections 67, which extend, as observed from the direction normal to the second substrate 8 within the pixel, in directions at about 45° to the signal lines 3. In this embodiment, at a substantially middle portion of a pixel, a projection 67a extending from the adjacent pixel on one side bends at 90° and then extends back to that adjacent pixel, and, in comer portions of the pixel, projections 67b extending from the adjacent pixel on the other side run parallel to the linear portions of the projection 67a, which is bent at a right angle. In this embodiment, the projections 67 are formed in zigzags to extend over a plurality of pixels. It is, however, also possible to form the projections 67 independently within each pixel.

Within the pixel, as observed from the direction normal to the second substrate 8, slits 68 are formed along the middle between every two mutually adjacent projections 67, and the slits 68 run parallel to the projections 67 adjacent thereto. Thus, the slits 68 and the projections 67 run in directions 45° to the transmission axes of the polarizers 19 and 20, and accordingly permit liquid crystal molecules to be inclined in the ideal inclination directions, specifically in directions 45° to the transmission axes. In this embodiment, the slits 68 and the projections 67 are arranged substantially symmetrically with respect to the axis that is parallel to the scanning lines 2 and that runs through a substantially middle portion of the pixel electrode (in this embodiment, the axis coincides with the auxiliary capacitance electrode line 60). This permits four areas with different inclination directions of the liquid crystal molecules 14 to be arranged evenly within each pixel.

In the parts of a peripheral portion of the pixel electrode 4 where the influence of edge portions of the pixel electrode 4 is great owing to their location relative to the slits 68 and the projections 67, there are formed sawtooth-shaped portions so that the influence of edge portions is cancelled out and thereby alleviated among differently inclined edges within each sawtooth-shaped portion 65. The peripheral portion so shaped also helps reduce the influence of the electric fields from the adjacent pixels and thereby reduce the influence on the liquid crystal molecules 14 within the pixel electrode 4.

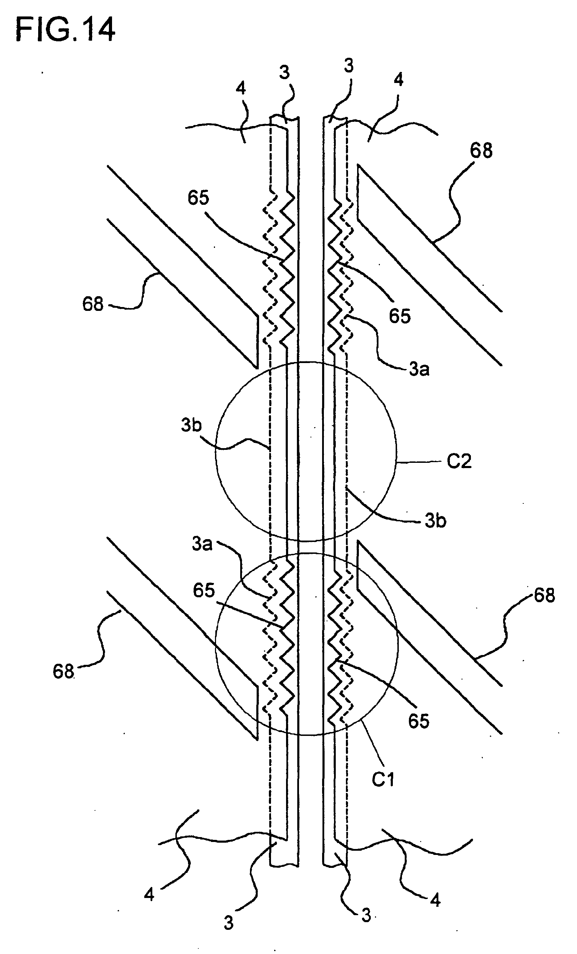

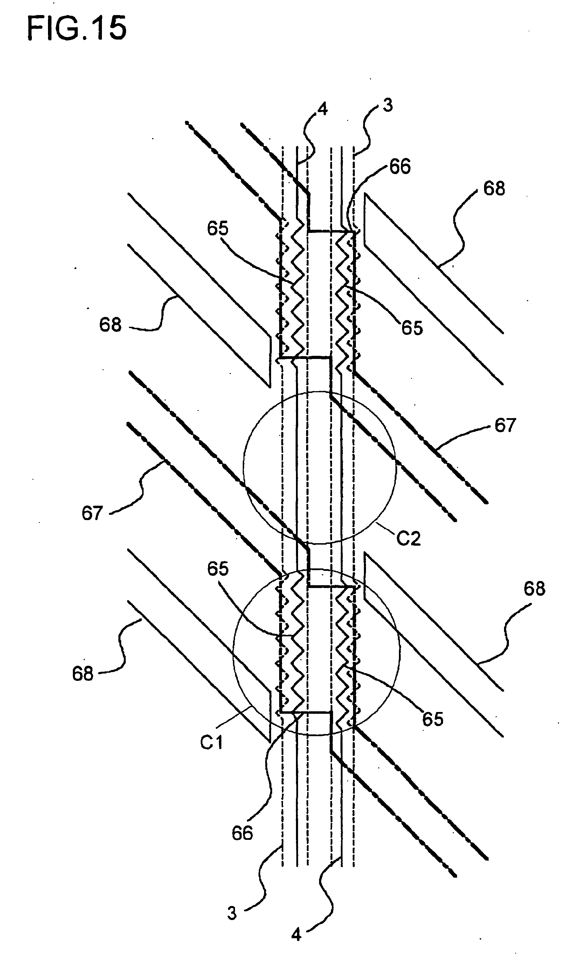

Fig. 14 is an enlarged view of a principal portion of an edge portion where sawtooth-shaped portions 65 are formed, and Fig. 15 is an enlarged view of a principal portion showing the positional relationship between the edge portion, where the sawtooth-shaped portions 65 are formed, and the projections 67. Figs. 14 and 15 are enlarged views of the same portion, with the projections 67 omitted in Fig. 14 to make it easy to grasp the positional relationship between the edge portion of the pixel electrodes 4 and the signal line 3, and with the projections 67 shown in Fig. 15 to make it easy to grasp the positional relationship between the edge portion of the pixel electrodes 4 and the projections 67. In an edge portion, where the angle between an edge of the pixel electrode 4 and the direction in which the slit 68 approaching it extends is about 45°, the edge portion greatly influences the liquid crystal molecules that are inclined by being restricted by the slit 68. This causes the inclination directions of the liquid crystal molecules 14 to deviate greatly from their ideal inclination directions. In this embodiment, of all the edge portions located between the slits 68 and the projections 67, those located where (areas C1) the angle between an edge of the pixel electrode 4 and the direction in which the slit 68 approaching it extends is about 45° are formed into sawtooth-shaped portions 65, and those located where (areas C2) the angle between an edge of the pixel electrode 4 and the direction in which the slit 68 approaching it extends is about 135° are formed into linear portions. Through experiments, it was found that forming only the portions (the areas C1) where the influence of edge portions is great into a sawtooth shape resulted in less uneven display and thus more satisfactory display result than forming all the edge portions of the pixel electrode 4 along its longer sides into a sawtooth shape. The sawtooth-shaped portions 65 are formed mainly along the longer sides of the pixel electrode 4. In this embodiment, there is formed one sawtooth-shaped portion also along the shorter sides of the pixel electrode 4, where no TFT 5 is formed.

To maximize the aperture ratio of the pixel, the edge portions of the pixel electrode 4 overlap the signal lines 3, with the protective films 62 and 63 interposed therebetween. Even when the pixel electrode 4 is insulated from the signal lines 3 with the protective films 62 and 63, if the distance between the pixel electrode 4 and the signal lines 3 is small, the voltages applied to the signal lines 3 conduct to the pixel electrode 4, and the overlaps between the signal lines 3 and the pixel electrode 4 act as capacitors. This causes variation of the voltage on the pixel electrode 4, and causes uneven display. To avoid such inconveniences, the protective films 62 and 63 are made thick to secure as great a distance as possible between the pixel electrode 4 and the signal lines 3. However, there are design limits to the thicknesses of the protective films 62 and 63, and this makes it impossible to prevent the overlaps from acting as capacitors. For design reasons, the overlaps between the signal lines 3 and the pixel electrode 4 are indispensable. This is because, if there are gaps between the signal lines 3 and the pixel electrode 4 as seen from the direction normal to the second substrate 8, light leaks through those gaps, leading to lower contrast and other problems. Accordingly, no gap should be left between the signal lines 3 and the pixel electrode 4 even if the signal lines 3 and the pixel electrode 4, when formed, are patterned in deviated positions relative to each other. For this reason, certain overlaps are indispensable as margins. According to the present invention, all along the longer sides of the pixel electrode 4, the overlaps between the pixel electrode 4 and the signal lines 3 are given a constant width so as to minimize the overlaps and thereby alleviate uneven display. As shown in Fig. 14, the parts of the contours of the signal lines 3 overlapping the pixels electrode 4 are kept at a constant distance from edge portions of the pixel electrode 4. Thus, at places where the edge portions are sawtooth-shaped (the areas C1), the signal lines 3 have a sawtooth-shaped contour 3a, and, where the edge portions are linear (the areas C2), the signal lines 3 have a linear contour 3b. In this way, it is possible to make the pixel electrode 4 larger and thereby increase the aperture ratio while alleviating uneven display in edge portions of the pixel electrode 4.

On the second substrate 8, there are formed auxiliary projections 66 in positions corresponding to the sawtooth-shaped portions 65 of the pixel electrode 4. The auxiliary projections 66 are formed of the same material and at the same time as the projections 67, and have, in their portions corresponding to the sawtooth-shaped portions 65, a width equal to or larger than the signal lines 3 as observed from the direction normal to the second substrate 8. In this embodiment, the sawtooth-shaped portions 65 of mutually adjacent pixel electrodes 4 are formed adjacent to each other, and therefore the auxiliary projections 66 corresponding to given sawtooth-shaped portions 65 are formed together with the auxiliary projections 66 corresponding to the sawtooth-shaped portions 65 adjacent thereto. As observed in the section shown in Fig. 12, the inclination directions of the liquid crystal molecules 14 restricted by the edge portions of the pixel electrode 4 are opposite to the inclination directions of the liquid crystal molecules 14 restricted by the auxiliary projections 66. Moreover, the inclination directions of the liquid crystal molecules 14 owing to the auxiliary projections 66 are less deviated, than those owing to the edge portions, from the inclination directions of the liquid crystal molecules 14 restricted by the slits 68 close to the edge portions. Since the auxiliary projections 66 are formed to face the sawtooth-shaped portions 65, by restricting, with the auxiliary projections 66, the inclination directions of the liquid crystal molecules 14 located on the second substrate 8 side, it is possible to further reduce the influence of edge portions of the pixel electrode 4 on the liquid crystal molecules 14.

When the liquid crystal molecules 14 are inclined in the horizontal direction, the influence of edge portions of the pixel electrode 4 on the liquid crystal molecules 14 is alleviated by the sawtooth-shaped portions 65 of the pixel electrode 4 and the auxiliary projections 66. Thus, the liquid crystal molecules 14 within the pixel electrode 4 are eventually inclined in directions about 45° to the transmission axes. This makes it possible to efficiently use the transmission light that is transmitted through the liquid crystal layer. Moreover, it is possible to make uniform the difference between the actual and ideal (45° to the transmission axes) inclination directions of the liquid crystal molecules 14 within the pixel, and thereby alleviate uneven display.

It is to be understood that the present invention may be carried out in any other manner, within the scope of the invention, than specifically described above as the tenth embodiment. For example, the edge portions of the pixel electrodes and the contours of the signal lines may be formed into any non-linear shape, for example a wave-like shape, instead of into a sawtooth shape as specifically described in the above embodiment. The edge portions of the pixel electrodes may be formed into a sawtooth shape all along the longer sides thereof. In that case, the contours of the signal lines are also formed into a sawtooth shape so as to fit the shape of the edge portions.

The present invention is effective also in cases where the pixel electrodes do not overlap the signal lines. In such cases, by keeping a constant interval between the pixel electrodes and the signal lines, it is possible to alleviate the influence of electric fields, in particular those from the signal lines. By alleviating the influence on the pixel electrodes from the signal lines, it is possible to obtain optimum display result with less uneven display.

### Industrial applicability

Liquid crystal display devices according to the present invention can be used in various apparatuses provided with a display, such as portable terminals and large-screen television monitors.

## Claims

1. A liquid crystal display device comprising:
a first substrate having pixel electrodes formed thereon in a matrix-like formation;
a second substrate having a transparent electrode formed thereon;
strip-like projections formed on one of the first and second substrates;
slits formed in the other of the first and second substrates so as to correspond to the projections;
alignment films laid on the first and second substrates individually and subjected to vertical alignment treatment; and
a liquid crystal layer sandwiched between the first and second substrates and having negative dielectric constant anisotropy,
liquid crystal molecules being aligned, when no electric field is applied to the liquid crystal layer, vertically and, when an electric field is applied to the liquid crystal layer, in a direction to which the liquid crystal molecules are restricted by the slits and the projections,
wherein the slits are formed substantially parallel to directions in which the projections extend, and
parts of contours of the slits facing the projections are formed in directions deviated by a correction angle from directions in which the slits themselves extend.

2. A liquid crystal display device comprising:
a first substrate having pixel electrodes formed thereon in a matrix-like formation;
a second substrate having a transparent electrode formed thereon;
strip-like projections formed on one of the first and second substrates,
slits formed in the other of the first and second substrates so as to correspond to the projections;
alignment films laid on the first and second substrates individually and subjected to vertical alignment treatment; and
a liquid crystal layer sandwiched between the first and second substrates and having negative dielectric constant anisotropy,
liquid crystal molecules being aligned, when no electric field is applied to the liquid crystal layer, vertically and, when an electric field is applied to the liquid crystal layer, in a direction to which the liquid crystal molecules are restricted by the slits and the projections,
wherein the slits are formed substantially parallel to directions in which the projections extend, and
parts of contours of the projections facing the slits are formed in directions deviated by a correction angle from the directions in which the projections themselves extend.

3. A liquid crystal display device comprising:
a first substrate having pixel electrodes formed thereon in a matrix-like formation;
a second substrate having a transparent electrode formed thereon;
strip-like projections formed on one of the first and second substrates,
slits formed in the other of the first and second substrates so as to correspond to the projections;
alignment films laid on the first and second substrates individually and subjected to vertical alignment treatment; and
a liquid crystal layer sandwiched between the first and second substrates and having negative dielectric constant anisotropy,
liquid crystal molecules being aligned, when no electric field is applied to the liquid crystal layer, vertically and, when an electric field is applied to the liquid crystal layer, in a direction to which the liquid crystal molecules are restricted by the slit and the projection,
wherein the slits are formed substantially parallel to directions in which the projections extend,
parts of contours of the slits facing the projections are formed in directions deviated by a first correction angle from directions in which the slits themselves extend, and
parts of contours of the projections facing the slits are formed in directions deviated by a second correction angle from the directions in which the projections themselves extend.

4. A liquid crystal display device as claimed in claim 3,
wherein the first and second correction angles are equal.

5. A liquid crystal display device comprising:
a first substrate having pixel electrodes formed thereon in a matrix-like formation;
a second substrate having a transparent electrode formed thereon;
strip-like projections formed on one of the first and second substrates,
slits formed in the other of the first and second substrates so as to correspond to the projections;
alignment films laid on the first and second substrates individually and subjected to vertical alignment treatment; and
a liquid crystal layer sandwiched between the first and second substrates and having negative dielectric constant anisotropy,
liquid crystal molecules being aligned, when no electric field is applied to the liquid crystal layer, vertically and, when an electric field is applied to the liquid crystal layer, in a direction to which the liquid crystal molecules are restricted by the slit and the projection,
wherein, in edge portions of the pixel electrodes, there is provided alleviating means for alleviating an influence of the electric field that acts on the liquid crystal molecules from the edge portions.

6. A liquid crystal display device as claimed in claim 5,
wherein, as the alleviating means, sawtooth-shaped portions are formed in the edge portions of the pixel electrodes.

7. A liquid crystal display device as claimed in claim 5,
wherein, as the alleviating means, at least edge portions of the pixel electrodes along longer sides thereof are formed in a sawtooth shape.

8. A liquid crystal display device as claimed in claim 5,
wherein, as the alleviating means, a plurality of pin holes are formed in the edge portions of the pixel electrodes.

9. A liquid crystal display device as claimed in claim 5,
wherein, as the alleviating means, second slits are formed in the edge portions of the pixel electrodes.

10. A liquid crystal display device as claimed in claim 5,
wherein, as the alleviating means, second slits are formed in the edge portions of the pixel electrodes, and second projections are formed on the second substrate so as to correspond to the second slits, the second projections, as seen from a direction normal to the second substrate, being substantially parallel to the second slits adjacent thereto and being located near the edge portions of the pixel electrodes.

11. A liquid crystal display device as claimed in claim 5,
wherein, as seen from a direction normal to the second substrate, the alleviating means is located between the projections and the slits.

12. A liquid crystal display device as claimed in claim 5,
wherein the slits are formed substantially parallel to directions in which the projections extend, and
parts of contours of the slits facing the projections are formed in directions deviated by a correction angle from directions in which the slits themselves extend.

13. A liquid crystal display device as claimed in claim 5,
wherein the slits are formed substantially parallel to directions in which the projections extend, and
parts of contours of the projections facing the slits are formed in directions deviated by a correction angle from the directions in which the projections themselves extend.

14. A liquid crystal display device as claimed in one of claims 1, 2, 3, and 5,
wherein the slits are formed in the pixel electrodes, and the projections are formed on the second substrate.

15. A liquid crystal display device as claimed in one of claims 1, 2, 3, and 5,
wherein the correction angle is set at about 3° to about 15°.

16. A liquid crystal display device as claimed in one of claims 1, 2, 3, and 5,
wherein the slits are so formed as to be narrower in portions thereof near edges of the pixel electrodes than in portions thereof near centers of the pixel electrodes.

17. A liquid crystal display device as claimed in one of claims 1, 2, 3, and 5,
wherein the projections are so formed as to be wider in portions thereof near edges of the pixel electrodes than in portions thereof near centers of the pixel electrodes.

18. A liquid crystal display device as claimed in one of claims 1, 2, 3, and 5, further comprising:
a first polarizer laid on an outside of the first substrate; and
a second polarizer laid on an outside of the second substrate,
wherein the first and second polarizers are so arranged that transmission axes thereof are perpendicular to each other and that the transmission axis of one of the polarizers is at about 45° to the directions in which the slits extend.

19. A liquid crystal display device as claimed in one of claims 1, 2, 3, and 5, further comprising:
a first polarizer laid on an outside of the first substrate; and
a second polarizer laid on an outside of the second substrate,
wherein the first and second polarizers are so arranged that transmission axes thereof are perpendicular to each other and that the transmission axis of one of the polarizers is at about 45° to the directions in which the projections extend.

20. A liquid crystal display device comprising:
a first substrate having pixel electrodes formed thereon in a matrix-like formation;
slits formed in the pixel electrodes;
a second substrate having a transparent electrode formed thereon;
strip-like projections formed on the second substrate so as to correspond to the slits;
alignment films laid on the first and second substrates individually and subjected to vertical alignment treatment;
a liquid crystal layer sandwiched between the first and second substrates and having negative dielectric constant anisotropy;
a first polarizer laid on an outside of the first substrate; and
a second polarizer laid on an outside of the second substrate and having a transmission axis perpendicular to a transmission axis of the first polarizer,
liquid crystal molecules being aligned, when no electric field is applied to the liquid crystal layer, vertically and, when an electric field is applied to the liquid crystal layer, in a direction to which the liquid crystal molecules are restricted by the slits and the projections,
wherein parts of contours of the slits facing the projections are formed in directions deviated by a correction angle from directions that are at 45° to the transparent axis of one of the polarizers.

21. A liquid crystal display device comprising:
a first substrate having pixel electrodes formed thereon in a matrix-like formation;
slits formed in the pixel electrodes;
a second substrate having a transparent electrode formed thereon;
strip-like projections formed on the second substrate so as to correspond to the slits;
alignment films laid on the first and second substrates individually and subjected to vertical alignment treatment;
a liquid crystal layer sandwiched between the first and second substrates and having negative dielectric constant anisotropy;
a first polarizer laid on an outside of the first substrate; and
a second polarizer laid on an outside of the second substrate and having a transmission axis perpendicular to a transmission axis of the first polarizer,
liquid crystal molecules being aligned, when no electric field is applied to the liquid crystal layer, vertically and, when an electric field is applied to the liquid crystal layer, in a direction to which the liquid crystal molecules are restricted by the slits and the projections,
wherein parts of contours of the projections facing the slits are formed in directions deviated by a correction angle from directions that are at 45° to the transparent axis of one of the polarizers.

22. A liquid crystal display device as claimed in claim 20 or 21,
wherein the correction angle is set at about 3° to about 15°.

23. A liquid crystal display device as claimed in one of claims 1, 2, 3, 5, 20, and 21,
wherein the projections are formed in zigzags so as to extend over a plurality of pixels.

24. A liquid crystal display device as claimed in one of claims 1, 2, 3, 5, 20, and 21,
wherein auxiliary projections are formed on the second substrate so as to lie along edge portions of the pixel electrodes.

25. A liquid crystal display device as claimed in one of claims 1, 2, 3, 5, 20, and 21,
wherein auxiliary projections are formed on the second substrate so as to lie along edge portions of the pixel electrodes, and the auxiliary projections extend along 2 / 3 or more of edge portions of the pixel electrode along longer sides thereof.

26. A liquid crystal display device as claimed in one of claims 1, 2, 3, 5, 20, and 21,
wherein the projections are formed of a positive material.

27. A liquid crystal display device comprising:
a first substrate having a plurality of scanning lines and a plurality of signal lines formed thereon in a matrix-like formation;
switching devices formed at intersections between the scanning lines and the signal lines;
pixel electrodes formed in areas surrounded by the scanning lines and the signal lines and connected to the switching devices;
a second substrate arranged face-to-face to the first substrate and having color filters formed thereon so as to correspond to the pixel electrodes; and
liquid crystal sealed between the first and second substrates,
wherein at least parts of edge portions of the pixel electrodes facing signal lines are formed in zigzags, and parts of contours of the signal lines facing the pixel electrodes are so formed as to run along the edge portions of the pixel electrodes.

28. A liquid crystal display device as claimed in claim 27,
wherein a substantially constant interval is kept between the edge portions of the pixel electrodes and the contours of the signal lines all along longer sides of the pixel electrodes.

29. A liquid crystal display device as claimed in claim 27,
wherein, as seen from a direction normal to the first substrate, the edge portions of the pixel electrodes overlap the signal lines.

30. A liquid crystal display device as claimed in claim 27,
wherein the parts of the pixel electrodes formed in zigzags are sawtooth-shaped.

31. A liquid crystal display device as claimed in claim 27,
wherein a plurality of strip-shaped projections are formed on the second substrate, slits are formed in the pixel electrodes so as to be located substantially parallel to the projections,
a liquid crystal layer having negative dielectric constant anisotropy is sandwiched between the first and second substrates, and
as seen from a direction normal to the first substrate, the parts of the pixel electrodes formed in zigzags are located between the projections and the slits.

32. A liquid crystal display device comprising:
a first substrate having pixel electrodes formed thereon in a matrix-like formation;
a second substrate having a transparent electrode formed thereon;
strip-like projections formed on the second substrate so as to obliquely cross, as observed from a direction normal to the second substrate, edge portions of the pixel electrodes;
slits formed in the pixel electrodes so as to be parallel to the projections adjacent thereto;
alignment films laid on the first and second substrates individually and subjected to vertical alignment treatment; and
a liquid crystal layer sandwiched between the first and second substrates and having negative dielectric constant anisotropy,
liquid crystal molecules being aligned, when no electric field is applied to the liquid crystal layer, vertically and, when an electric field is applied to the liquid crystal layer, in a direction to which the liquid crystal molecules are restricted by the slits and the projections,
wherein parts of edge portions of the pixel electrodes are formed in a sawtooth shape, and the sawtooth-shaped portions are located between the projections and the slits, at places where the slits approach the edge portions at an angle of 90° or less.

33. A liquid crystal display device as claimed in claim 32,
wherein auxiliary projections are formed on the second substrate in positions facing the sawtooth-shaped portions of the pixel electrodes.

34. A liquid crystal display device as claimed in claim 32,
wherein directions in which the slits extend cross at 45° the edge portions of the pixel electrodes.

35. A liquid crystal display device as claimed in claim 32, further comprising:
a first polarizer laid on an outside of the first substrate; and
a second polarizer laid on an outside of the second substrate,
wherein the first and second polarizers are so arranged that transmission axes thereof are perpendicular to each other and that, as observed from a direction normal to the second substrate, the transmission axis of one of the polarizer is at about 45° to the direction in which the slits extend.

36. A liquid crystal display device as claimed in claim 32,
wherein part of the projections are bent at a right angle within pixels.

37. A liquid crystal display device as claimed in one of claims 1, 2, 3, 5, 20, 21, 31, and 32,
wherein the projections have a height of 1.5 µm or more.

38. A liquid crystal display device as claimed in one of claims 1, 2, 3, 5, 20, 21, 27, and 32,
wherein an interval between the first and second substrates is 3.0 µm to 3.5 µm.
